(19) Europäisches Patentamt
European Patent Office
Office européen des brevets

(11) EP 0 885 923 A1

(12) **EUROPÄISCHE PATENTANMELDUNG**

(43) Veröffentlichungstag:
**23.12.1998 Patentblatt 1998/52**

(21) Anmeldenummer: **98118225.6**

(22) Anmeldetag: **06.04.1995**

(51) Int Cl.[6]: **C08K 5/15**, C08K 3/00, C08K 5/00
// (C08K5/15, 5:15, 3:00), (C08K5/15, 5:15, 5:00)

(84) Benannte Vertragsstaaten:
**AT BE CH DE DK ES FR GB IT LI NL PT SE**

(30) Priorität: **15.04.1994 CH 1143/94**

(62) Dokumentnummer(n) der früheren Anmeldung(en) nach Art. 76 EPÜ:
**95810226.1 / 0 677 549**

(71) Anmelder: **Ciba Specialty Chemicals Holding Inc.**
**4057 Basel (CH)**

(72) Erfinder:
- **Wehner, Wolfgang**
  **64372 Ober-Ramstadt (DE)**
- **Drewes, Rolf**
  **79415 Bad Bellingen (DE)**
- **Kuhn, Karl Josef**
  **64686 Lautertal (DE)**
- **Sander, Hans-Jürgen**
  **64653 Lorsch (DE)**
- **Kolb, Markus**
  **68723 Plankstadt (DE)**

Bemerkungen:
Diese Anmeldung ist am 25 - 09 - 1998 als Teilanmeldung zu der unter INID-Kode 62 erwähnten Anmeldung eingereicht worden.

(54) **Stabilisierte halogenhaltige Polymere**

(57) Durch Verwendung von Maltit oder Laktit und einer anorganischen oder organischen Zink-, Aluminium- oder Seltenerd-Verbindung wird eine hohe Stabilisierung von einem halogenhaltigen Polymeren oder Polymer-Recyclaten erreicht.

EP 0 885 923 A1

## Beschreibung

Die Erfindung betrifft stabilisierte halogenhaltige Polymere oder deren Recyclate, vorzugsweise Polyvinylchlorid (PVC) oder dessen Recyclate, und eine Stabilisatormischung enthaltend Maltit oder Laktit und ein Verfahren zur Herstellung von stabilisierten halogenhaltigen Polymeren.

Neben Zinn- und Bleiverbindungen werden zur Stabilisierung von PVC auch Fettsäuresalze sogenannte Metallseifen verwendet, wobei es sich üblicherweise bei den Metallen um Barium, Cadmium, Zink, Magnesium oder Calcium handelt. Im Hinblick auf die unterschiedlichen Stabilisierungseigenschaften (Anfangsfarbe, Farbhaltung und Langzeitstabilität) wird zur Erreichung einer ausgewogenen Stabilisierung jeweils eine Kombination von zwei verschiedenen Metallseifen eingesetzt, wie beispielsweise Ba/Cd-Seifen. Zur Vermeidung von Barium, Blei oder Cadmium enthaltenden Verbindungen wurden auch Ca/Zn-Seifen vorgeschlagen; vergleiche hierzu beispielsweise "Taschenbuch der Kunststoff-Additive", Herausgeber R. Gächter und H. Müller, (abgekürzt im folgenden als "KA'e G&M") Hanser Verlag, 3.Auflage, 1990, Seiten 308-309 und Kunststoff Handbuch PVC, Band 1 und 2, Beck/Braun, Carl Hanser Verlag, 2. Auflage, 1985/1986.

Weiterhin werden als Costabilisatoren für PVC in Gegenwart einer Kombination von Calcium- und Zinkseifen unter anderem auch Polyole oder Maltit vorgeschlagen; Beispiele finden sich in JP63-063,737.

Es besteht jedoch weiterhin das Bedürfnis ein physiologisch unbedenkliches Stabilisatorsystem zur Verfügung zu haben, das gleichzeitig eine hohe Stabilisierung ermöglicht. Insbesondere sind Stabilisatorsysteme, welche Barium, Blei oder Cadmium enthalten, zu vermeiden.

Es wurde nun gefunden, dass Maltit und Laktit in Mischung mit einer Zink-, Aluminium- oder Seltenerd-Verbindung einem halogenhaltigen Polymer eine hervorragende Langzeitstabilität bei guter Anfangsfarbe und Farbhaltung verleihen.

Gegenstand der Erfindung ist somit ein stabilisiertes halogenhaltiges Polymer enthaltend

(a) ein halogenhaltiges Polymer oder dessen Recyclat,
(b) Maltit oder Laktit
und (c) eine anorganische oder organische Zink-, Aluminium- oder Seltenerd-Verbindung, wobei die Zusammensetzung keine Kombination einer Calcium- und Zinkseife enthält, wenn Komponente (b) Maltit ist.

Ein solchermassen stabilisiertes halogenhaltiges Polymer enthält vorzugsweise keine Barium-, Blei- oder Cadmiumverbindungen. Als halogenhaltige Polymere oder deren Recyclate sind chlorhaltige bevorzugt beispielsweise: Polymere des Vinylchlorides, Vinylharze, enthaltend Vinylchlorideinheiten in deren Struktur, wie Copolymere des Vinylchlorids und Vinylester von aliphatischen Säuren, insbesondere Vinylacetat, Copolymere des Vinylchlorids mit Estern der Acryl- und Methycrylsäure und mit Acrylnitril, Copolymere des Vinylchlorids mit Dienverbindungen und ungesättigten Dicarbonsäuren oder deren Anhydride, wie Copolymere des Vinylchlorids mit Diethylmaleat, Diethylfumarat oder Maleinsäureanhydrid, nachchlorierte Polymere und Copolymere des Vinylchlorids, Copolymere des Vinylchlorids und Vinylidenechlorids mit ungesättigten Aldehyden, Ketonen und anderen, wie Acrolein, Crotonaldehyd, Vinylmethylketon, Vinylmethylether, Vinylisobutylether und ähnliche; Polymere des Vinylidenchlorids und Copolymere desselben mit Vinylchlorid und anderen polymerisierbaren Verbindungen; Polymere des Vinylchloracetates und Dichlordivinylethers; chlorierte Polymere des Vinylacetates, chlorierte polymerische Ester der Acrylsäure und der alpha-substituierten Acrylsäure; Polymere von chlorierten Styrolen, zum Beispiel Dichlorstyrol; chlorierte Gummis; chlorierte Polymere des Ethylens; Polymere und nachchlorierte Polymere von Chlorbutadiens und deren Copolymere mit Vinylchlorid, Gummi-Hydrochlorid und chloriertes Gummi-Hydrochlorid; sowie Mischungen der genannten Polymere unter sich oder mit anderen polymerisierbaren Verbindungen.

Ferner sind umfasst die Pfropfpolymerisate von PVC mit EVA, ABS und MBS. Bevorzugte Substrate sind auch Mischungen der vorstehend genannten Homo-und Copolymerisate, insbesondere Vinylchlorid-Homopolymerisate, mit anderen thermoplastischen oder/und elastomeren Polymeren, insbesondere Blends mit ABS, MBS, NBR, SAN, EVA, CPE, MBAS, PMA, PMMA, EPDM und Polylactonen.

Weiterhin bevorzugt sind Suspensions- und Massepolymere, sowie Emulsionspolymere. Als chlorhaltiges Polymerisat ist Polyvinylchlorid besonders bevorzugt, insbesondere Suspensionspolymerisat und Massepolymerisat.

Im Rahmen dieser Erfindung sind unter (a) PVC auch Copolymerisate oder Pfropfpolymerisate von PVC mit polymerisierbaren Verbindungen wie Acrylnitril, Vinylacetat oder ABS zu verstehen, wobei es sich um Suspensions-, Masse- oder Emulsionspolymerisate handeln kann. Bevorzugt ist PVC Homopolymer auch in Kombination mit Polyacrylaten.

Weiterhin sind im Rahmen dieser Erfindung unter (a) auch insbesondere Recyclate halogenhaltiger Polymere zu verstehen, wobei es sich hierbei um die oben näher beschriebenen Polymere handelt, welche durch Verarbeitung, Gebrauch oder Lagerung eine Schädigung erfahren haben. Besonders bevorzugt ist PVC-Recyclat. In den Recyclaten können auch kleine Mengen an Fremdstoffen enthalten sein, wie z.B. Papier, Pigmente, Klebstoffe, die oft schwierig

zu entfernen sind. Diese Fremdstoffe können auch aus dem Kontakt mit diversen Stoffen während des Gebrauchs oder der Aufarbeitung stammen, wie z.B. Treibstoffreste, Lackanteile, Metallspuren, Initiatorreste oder auch Wasserspuren.

Die erfindungsgemäss als Komponente (b) verwendbaren Maltit oder Laktit sind allgemein bekannt.

Der erfindungsgemäss als Komponente (b) verwendbaren Maltit oder Laktit kann in einer Menge von beispielsweise 0,01 bis 10, zweckmässig 0,01 bis 5, besonders bevorzugt 0,01 bis 3 Gew.-Teilen, bezogen auf 100 Gew.-Teile halogenhaltiges Polymer, eingesetzt werden.

Zweckmässig ist ein stabilisiertes halogenhaltiges Polymer, wie oben beschrieben, enthaltend als (c) mindestens eine anorganische Zinkverbindung, wie beispielsweise Zinkoxid, hydroxid, -chlorid, -sulfid oder überbasische Zinkoxid/hydroxid Additionsverbindungen, oder eine organische Zinkverbindung aus der Reihe der aliphatischen gesättigten $C_2$-$C_{22}$-Carboxylate, der aliphatischen ungesättigten $C_3$-$C_{22}$-Carboxylate, der aliphatischen $C_2$-$C_{22}$-Carboxylate, die mit wenigstens einer OH-Gruppe substituiert sind oder deren Kette wenigstens durch ein O-Atom unterbrochen ist (Oxasäuren), der cyclischen und bicyclischen Carboxylate mit 5-22 C-Atomen, der unsubstituierten, mit wenigstens einer OH-Gruppe substituierten und/oder $C_1$-$C_{16}$-alkylsubstituierten Phenylcarboxylate, der unsubstituierten, mit wenigstens einer OH-Gruppe substituierten und/oder $C_1$-$C_{16}$-alkylsubstituierten Naphthylcarboxylate, der Phenyl-$C_1$-$C_{16}$-alkylcarboxylate, der Naphthyl-$C_1$-$C_{16}$-alkylcarboxylate oder der gegebenenfalls mit $C_1$-$C_{12}$-Alkyl substituierten Phenolate.

Namentlich zu erwähnen sind, als Beispiele, die Zinksalze der monovalenten Carbonsäuren, wie Essigsäure, Propionsäure, Buttersäure, Valeriansäure, Hexansäure, Önanthsäure, Octansäure, Neodecansäure, 2-Ethylhexansäure, Pelargonsäure, Decansäure, Undecansäure, Dodecansäure, Tridecansäure, Myristylsäure, Palmitinsäure, Isostearinsäure, Stearinsäure, 12-Hydroxystearinsäure, 9,10-Dihydroxystearinsäure, 3,6-Dioxaheptansäure, 3,6,9-Trioxadecansäure, Behensäure, Benzoesäure, p-tert-Butylbenzoesäure, Dimethylhydroxybenzoesäure, 3,5-Di-tert-butyl-4-hydroxybenzoesäure, Tolylsäure, Dimethylbenzoesäure, Ethylbenzoesäure, n-Propylbenzoesäure, Salicylsäure, p-tert-Octylsalicylsäure, und Sorbinsäure; Zinksalze der Monoester der divalenten Carbonsäuren, wie Oxalsäure, Malonsäure, Bernsteinsäure, Glutarsäure, Adipinsäure, Fumarsäure, Pentan-1,5-dicarbonsäure, Hexan-1,6-dicarbonsäure, Heptan-1,7-dicarbonsäure, Octan-1,8-dicarbonsäure, 3,6,9-Trioxadecan-1,10-dicarbonsäure, Polyglykol-dicarbonsäure (n=10-12), Phthalsäure, Isophthalsäure, Terephthalsäure und Hydroxyphthalsäure; und der Di- oder Triester der tri-oder tetravalenten Carbonsäuren, wie Hemimellithsäure, Trimellithsäure, Pyromellithsäure, Zitronensäure sowie Zn-Salze der 1-fach und 2-fach veresterten Phosphorsäure oder der 1-fach veresterten phosphorigen Säure, wie in JP-A-3,275,570 beschrieben.

Bevorzugt sind Zusammensetzungen, wie beschrieben, enthaltend als (c) eine organische Zinkverbindung, insbesondere ein organisches Zinkcarboxylat einer Carbonsäure mit 7 bis 18 C-Atomen (Zinkseifen), wie beispielsweise Benzoate oder Alkanoate, bevorzugt Stearat, Oleat, Laurat, Palmitat, Behenat, Hydroxystearate, Dihydroxystearate oder (Iso)octanoat, Besonders bevorzugt sind Stearat, Oleat, Benzoat und 2-Ethylhexanoat.

Neben den genannten Zink-Verbindungen kommen als Komponente (c) auch anorganische oder organische Aluminium-Verbindungen in Frage, für welche die oben für die Zink-Verbindungen gemachten Angaben gelten. Zu den verwendbaren und bevorzugten Aluminium-Verbindungen finden sich weiter Erläuterungen in US-A-4,060,512.

Neben den genannten Zink-Verbindungen kommen als Komponente (c) auch anorganische oder organische Seltenerd-Verbindungen in Frage, für welche die oben für die Zink-Verbindungen gemachten Angaben gelten. Unter dem Begriff Seltenerd-Verbindung sind vorallem Verbindungen der Elemente Cer, Praseodym, Neodym, Samarium, Europium, Gadolinium, Terbium, Dysprosium, Holmium, Erbium, Thulium, Ytterbium, Lutetium, Lanthan und Yttrium zu verstehen, wobei Gemische insbesondere mit Cer bevorzugt sind. Weitere bevorzugte Seltenerd-Verbindungen finden sich in der EP-A-0108023.

Gegebenenfalls kann ein Gemisch von Zink-, Aluminium-, Lanthan- oder Lanthanoid-Verbindung unterschiedlicher Struktur eingesetzt werden. Auch können organische Zink-, Aluminium-, Lanthan- oder Lanthanoid-Verbindungen auf einen Hydrotalcit, Zeolith oder Dawsonit gecoatet sein; siehe hierzu auch DE-A-4031818.

Die anorganische oder bevorzugt organische Zink-, Aluminium-, oder Seltenerd-Verbindung kann in einer Menge von beispielsweise 0,001 bis 5, zweckmässig 0,01 bis 3, besonders bevorzugt 0,1 bis 2 Gew.-Teilen, bezogen auf 100 Gew.-Teile halogenhaltiges Polymer, eingesetzt werden.

Das erfindungsgemäss stabilisierte PVC kann weitere Additive enthalten. Es handelt sich beispielsweise um anorganische oder organische Calcium- oder Magnesium-Verbindungen, Zeolithe, Hydrotalcite, Dawsonite, Magadiite, Kenyaite, Kanemite, 1,3-Diketoverbindungen, Polyole, N-haltige Verbindungen z.B. $\beta$-Aminocrotonate wie in EP-A-0465405, S.6 Z.9-14 erwähnt, $\alpha$-Phenylindol, Pyrrole, sterisch gehinderte Amine (HALS), Dihydropyridine sowie deren Polymere, Perchlorate, Epoxide, phenolische Antioxidantien (HANDBOOK OF PVC FORMULATING E.J.Wickson John Wiley & Sons, Inc., 1993 SS.505-515), Naphthole, Thiophosphate, Weichmacher (HANDBOOK OF PVC FORMULATING E.J.Wickson John Wiley & Sons, Inc., 1993 SS.163-303), Füllstoffe (HANDBOOK OF PVC FORMULATING E. J.Wickson John Wiley & Sons, Inc., 1993 SS.393-449) und Verstärkungsmittel (TASCHENBUCH der KA'e R.Gächter & H.Müller, Carl Hanser, 1990, SS.549-615) (wie beispielsweise Calciumcarbonat, Magnesiumoxid, Magnesiumhydroxid, Silikate, Glasfasern, Talk, Kaolin, Kreide, Glimmer, Metalloxide und -hydroxide, Russ oder Graphit), Phosphite, Chelatoren (TASCHENBUCH der KA'e R.Gächter & H.Müller, Carl Hanser, 1990, SS.109-131), Lichtschutzmittel, UV-Absorber (HANDBOOK OF PVC FORMULATING E.J.Wickson John Wiley & Sons, Inc., 1993 SS.355-369), Gleitmittel (HANDBOOK OF PVC FORMULATING E.J.Wickson John Wiley & Sons, Inc., 1993 SS.369-393), Impact-Modifier (IMPACT MODIFIERS FOR PVC J.T.LUTZ & D.L.DUNKELBERGER John Wiley & Sons, Inc., 1992) und Verarbeitungshilfen (TASCHENBUCH der KA'e R.Gächter & H.Müller, Carl Hanser, 1990, SS.505-524), Fettsäureester, Paraffine, Treibmittel (HANDBOOK OF PVC FORMULATING E.J.Wickson John Wiley & Sons, Inc., 1993 SS.525-551), optische Aufheller (TASCHENBUCH der KA'e R.Gächter & H.Müller, Carl Hanser, 1990, SS.807-821), Gelierhilfen, Farbstoffe (HANDBOOK OF PVC FORMULATING E.J.Wickson John Wiley & Sons, Inc., 1993 SS.449-475), Pigmente (TASCHENBUCH der KA'e R.Gächter & H.Müller, Carl Hanser, 1990, SS.663-735), Flammschutzmittel und Rauchverminderer (HANDBOOK OF PVC FORMULATING E.J.Wickson John Wiley & Sons, Inc., 1993 SS.551-579), Antistatika (HANDBOOK OF PVC FORMULATING E.J.Wickson John Wiley & Sons, Inc., 1993 SS.487-505), Antifoggingagents (HANDBOOK OF PVC FORMULATING E.J.Wickson John Wiley & Sons, Inc., 1993 SS.475-487), Biocide, Thiodipropionsäure und deren Ester, Dialkyldisulfide (HANDBOOK OF PVC FORMULATING E.J.Wickson John Wiley & Sons, Inc., 1993 SS.515-525), Mercaptocarbonsäureester, peroxidzerstörende Verbindungen, Modifikatoren und weitere Komplexbildner für Lewis-Säuren.

Als anorganische oder organische Calcium- und Magnesium-Verbindungen kommen die bei den Zinkverbindungen erwähnten analogen Verbindungen in Frage. Bevorzugt sind organische Calcium- oder Magnesium-Verbindungen, insbesondere Calcium- oder Magnesiumseifen, sowie Calciumoxid, Calciumhydroxid und überbasische Calcium-Verbindungen wie sie z.B. in den EP-A-0446685, EP-A-0394547 und EP-A-0279493 beschrieben sind.

Neben den Komponenten (b) und (c) dieser Erfindung können auch Epoxyverbindungen, wie 1,2-Epoxide und Oxirane, in Mengen von beispielsweise bis zu 10 Gew.-Teilen, bezogen auf 100 Gew.-Teile Zusammensetzung, zweckmässig bis zu 5 Gew.-Teilen und vorzugsweise von 0,01 bis zu 2 Gew.-Teilen, angewendet werden. Beispiele dafür sind epoxidiertes Polybutadien, epoxidiertes Sojabohnenöl, epoxidiertes Leinsamenöl, epoxidiertes Fischöl, epoxidierter Talg, Methylbutyl- oder 2-Ethylhexylepoxystearat, Tris(epoxypropyl)isocyanurat, epoxidiertes Ricinusöl, epoxidiertes Sonnenblumenöl, 3-(2-Phenoxy)-1,2-epoxypropan, Bisphenol-A-polyglycidylether, Vinylcyclohexendiepoxyd, Dicyclopentadiendiepoxyd und 3,4-Epoxycyclohexylmethyl-3,4-epoxycyclohexancarboxylat.

Weitere im Rahmen der Erfindung verwendbaren Epoxidverbindungen können eine aliphatische, aromatische, cycloaliphatische, araliphatische oder heterocyclische Struktur haben; sie enthalten Epoxidgruppen als Seitengruppen. Die Epoxidgruppen sind vorzugsweise als Glycidylgruppen über Ether- oder Esterbindungen mit dem Restmolekül verbunden, oder es handelt sich um N-Glycidylderivate von heterocyclischen Aminen, Amiden oder Imiden. Epoxidverbindungen dieser Typen sind allgemein bekannt und im Handel erhältlich.

Die Epoxidverbindungen enthalten wenigstens einen Epoxyrest, insbesondere solche der FormelII

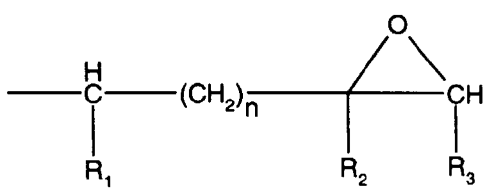 , (II)

wobei dieser direkt an Kohlenstoff, Sauerstoff-, Stickstoff- oder Schwefel atome gebunden ist, worin $R_1$ und $R_3$ beide Wasserstoff sind, $R_2$ Wasserstoff oder Methyl und n=0 ist, oder worin $R_1$ und $R_3$ zusammen $-CH_2-CH_2-$ oder $-CH_2-CH_2-CH_2-$ bedeuten, $R_2$ dann Wasserstoff und n=0 oder 1 ist.

Beispielhaft für Epoxidverbindungen sind zu erwähnen:

I) Glycidyl- und β-Methylglycidylester erhältlich durch Umsetzung einer Verbindung mit mindestens einer Carboxylgruppe im Molekül und Epichlorhydrin bzw. Glycerindichlorhydrin bzw. β-Methyl-epichlorhydrin. Die Umsetzung erfolgt zweckmässig in der Gegenwart von Basen.

Als Verbindungen mit mindestens einer Carboxylgruppe im Molekül können aliphatische Carbonsäuren verwendet werden. Beispiele für diese Carbonsäuren sind Glutarsäure, Adipinsäure, Pimelinsäure, Korksäure, Azelainsäure, Sebazinsäure oder dimerisierte bzw. trimerisierte Linolsäure, Acryl- und Methacrylsäure, Capron-, Capryl-, Laurin-, Myristin-, Palmitin-, Stearin- und Pelargonsäure, sowie die bei den organischen Zinkverbindungen erwähnten Säuren.

Es können aber auch cycloaliphatische Carbonsäuren eingesetzt werden, wie beispielsweise Cyclohexancarbonsäure, Tetrahydrophthalsäure, 4-Methyltetrahydrophthalsäure, Hexahydrophthalsäure oder 4-Methylhexahydrophthalsäure.

Weiterhin können aromatische Carbonsäuren Verwendung finden, wie beispielsweise Benzoesäure, Phthalsäure,

Isophthalsäure, Trimellithsäure oder Pyromellithsäure.

Ebenfalls können auch carboxylterminierte Addukte, z.B. von Trimellithsäure und Polyolen, wie beispielsweise Glycerin oder 2,2-Bis-(4-hydroxycyclohexyl)-propan verwendet werden.

Weitere im Rahmen dieser Erfindung verwendbare Epoxidverbindungen finden sich in der EP-A-0506617.

II) Glycidyl- oder (β-Methylglycidyl)-ether erhältlich durch Umsetzung einer Verbindung mit mindestens einer freien alkoholischen Hydroxygruppe und/oder phenolischen Hydroxygruppe und einem geeignet substituierten Epichlorhydrin unter alkalischen Bedingungen, oder in Anwesenheit eines sauren Katalysators und anschliessender Alkalibehandlung.

Ether dieses Typs leiten sich beispielsweise ab von acyclischen Alkoholen, wie Ethylenglykol, Diethylenglykol und höheren Poly-(oxyethylen)-glykolen, Propan-1,2-diol, oder Poly-(oxypropylen)-glykolen, Propan-1,3-diol, Butan-1,4-diol, Poly-(oxytetramethylen)-glykolen, Pentan-1,5-diol, Hexan-1,6-diol, Hexan-2,4,6-triol, Glycerin, 1,1,1-Trimethylolpropan, Bistrimethylolpropan, Pentaerythrit, Sorbit, sowie von Polyepichlorhydrinen, Butanol, Amylalkohol, Pentanol, sowie von monofunktionellen Alkoholen wie Isooctanol, 2-Ethylhexanol, Isodecanol sowie $C_7$-$C_9$-Alkanol- und $C_9$-$C_{11}$-Alkanolgemischen.

Sie leiten sich aber auch beispielsweise ab von cycloaliphatischen Alkoholen wie 1,3- oder 1,4-Dihydroxycyclohexan, Bis-(4-hydroxycyclohexyl)-methan, 2,2-Bis-(4-hydroxycyclohexyl)-propan oder 1,1-Bis-(hydroxymethyl)-cyclohex-3-en oder sie besitzen aromatische Kerne wie N,N-Bis-(2-hydroxyethyl)-anilin oder p,p'-Bis-(2-hydroxyethylamino)-diphenylmethan.

Die Epoxidverbindungen können sich auch von einkernigen Phenolen ableiten, wie beispielsweise von Phenol, Resorcin oder Hydrochinon; oder sie basieren auf mehrkernigen Phenolen wie beispielsweise auf Bis-(4-hydroxyphenyl)-methan, 2,2-Bis-(4-hydroxyphenyl)-propan, 2,2-Bis-(3,5-dibrom-4-hydroxyphenyl)-propan, 4,4'-Dihydroxydiphenylsulfon oder auf unter sauren Bedingungen erhaltene Kondensationsprodukte von Phenolen mit Formaldehyd wie Phenol-Novolake.

Weitere mögliche endständige Epoxide sind beispielsweise: Glycidyl-1-naphthylether, Glycidyl-2-phenylphenylether, 2-Biphenylglycidylether, N-(2,3-epoxypropyl)-phthalimid und 2,3-Epoxypropyl-4-methoxyphenylether.

III) (N-Glycidyl)-Verbindungen erhältlich durch Dehydrochlorierung der Reaktionsprodukte von Epichlorhydrin mit Aminen, die mindestens ein Aminowasserstoffatom enthalten. Bei diesen Aminen handelt es sich zum Beispiel um Anilin, N-Methylanilin, Toluidin, n-Butylamin, Bis-(4-aminophenyl)-methan, m-Xylylendiamin oder Bis-(4-methylaminophenyl)-methan, aber auch N,N,O-Triglycidyl-m-aminophenol oder N,N,O-Triglycidyl-p-aminophenol.

Zu den (N-Glycidyl)-Verbindungen zählen aber auch N,N'-Di-, N,N',N"-Tri- und N,N',N",N'"-Tetraglycidylderivate von Cycloalkylenharnstoffen, wie Ethylenharnstoff oder 1,3-Propylenharnstoff, und N,N'-Diglycidylderivate von Hydantoinen, wie von 5,5-Dimethylhydantoin oder Glykoluril und Triglycidylisocyanurat.

IV) S-Glycidyl-Verbindungen, wie beispielsweise Di-S-glycidylderivate, die sich von Dithiolen, wie beispielsweise Ethan-1,2-dithiol oder Bis-(4-mercaptomethylphenyl)-ether ableiten.

V) Epoxidverbindungen mit einem Rest der FormelII, worin $R_1$ und $R_3$ zusammen $-CH_2-CH_2-$bedeuten und n 0 ist, sind Bis-(2,3-epoxycyclopentyl)-ether, 2,3-Epoxycyclopentylglycidylether oder 1,2-Bis-(2,3-epoxycyclopentyloxy)-ethan. Eine Epoxidverbindung mit einem Rest der FormelII, worin $R_1$ und $R_3$ zusammen $-CH_2-CH_2-$ sind und n 1 bedeutet, ist beispielsweise 3,4-Epoxy-6-methyl-cyclohexancarbonsäure-(3',4'-epoxy-6'-methyl-cydohexyl)-methylester.

Geeignete endständige Epoxide sind beispielsweise:

a) flüssige Bisphenol-A-didlycidylether wie Araldit®GY 240, Araldit®GY 250, Araldit®GY 260, Araldit®GY 266, Araldit®GY 2600, Araldit®MY 790;

b) feste Bisphenol-A-didlycidylether wie Araldit®GT 6071, Araldit®GT 7071, Araldit®GT 7072, Araldit®GT 6063, Araldit®GT 7203, Araldit®GT 6064, Araldit®GT 7304, Araldit®GT 7004, Araldit®GT 6084, Araldit®GT 1999, Araldit®GT 7077, Araldit®GT 6097, Araldit®GT 7097, Araldit®GT 7008, Araldit®GT 6099, Araldit®GT 6608, Araldit®GT 6609, Araldit®GT 6610;

c) flüssige Bisphenol-F-diglycidylether wie Araldit®GY 281, Araldit®PY 302, Araldit®PY 306; d)feste Polyglycidylether von Tetraphenylethan wie CG Epoxy Resin®0163;

e) feste und flüssige Polyglycidylether von Phenolformaldehyd Novolak wie EPN 1138, EPN 1139, GY 1180, PY 307;

f) feste und flüssige Polyglycidylether von o-Cresolformaldehyd Novolak wie ECN 1235, ECN 1273, ECN 1280, ECN 1299;

g) flüssige Glycidylether von Alkoholen wie Shell® Glycidylether 162, Araldit®DY 0390, Araldit®DY 0391;

h)flüssige Glycidylether von Carbonsäuren wie Shell®Cardura E Terephthalsäureester, Trimellithsäureester, Araldit®PY 284;

i) feste heterocyclische Epoxidharze (Triglycidylisocyanurat) wie Araldit® PT 810;

j) flüssige cycloaliphatische Epoxidharze wie Araldit®CY 179;

k) flüssige N,N,O-Triglycidylether von p-Aminophenol wie Araldit®MY 0510;

l) Tetraglycidyl-4-4'-methylenbenzamin oder N,N,N',N'-Tetraglycidyldiaminophenylmethan wie Araldit®MY 720, Araldit®MY 721.

Vorzugsweise finden Epoxidverbindungen mit zwei funktionellen Gruppen Verwendung. Es können aber auch prinzipiell Epoxidverbindungen mit einer, drei oder mehr funktionellen Gruppen eingesetzt werden.

Vorwiegend werden Diglycidylverbindungen mit aromatischen Strukturen, wie beispielsweise Phenylresten, eingesetzt.

Gegebenenfalls kann auch ein Gemisch von Epoxidverbindungen unterschiedlicher Struktur eingesetzt werden.

Besonders bevorzugt sind als mehrfunktionelle Epoxidverbindungen Diglycidylether auf der Basis von Bisphenolen, wie beispielsweise von 2,2-Bis-(4-hydroxyphenyl)-propan (BisphenolA), Bis-(4-hydroxyphenyl)-methan oder Mischungen von Bis-(ortho/para-hydroxyphenyl)-methan (BisphenolF).

Verwendbare 1,3-Diketoverbindungen können lineare oder cyclische Dicarbonylverbindungen sein. Bevorzugt werden Diketoverbindungen der Formel (III) verwendet,

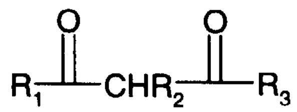

(III)

worin $R_1$ $C_1$-$C_{22}$-Alkyl, $C_5$-$C_{10}$-Hydroxyalkyl, $C_2$-$C_{18}$-Alkenyl, Phenyl, durch OH, $C_1$-$C_4$-Alkyl, $C_1$-$C_4$-Alkoxy oder Halogen substituiertes Phenyl, $C_7$-$C_{10}$-Phenylalkyl, $C_5$-$C_{12}$-Cycloalkyl, durch $C_1$-$C_4$-Alkyl substituiertes $C_5$-$C_{12}$-Cycloalkyl oder eine Gruppe -$R_5$-S-$R_6$ oder -$R_5$-O-$R_6$ bedeutet, $R_2$ Wasserstoff, $C_1$-$C_8$-Alkyl, $C_2$-$C_{12}$-Alkenyl, Phenyl, $C_7$-$C_{12}$-Alkylphenyl, $C_7$-$C_{10}$-Phenylalkyl oder eine Grupe -CO-$R_4$ bedeutet, $R_3$ eine der für $R_1$ gegebenen Bedeutungen hat oder $C_1$-$C_{18}$-Alkoxy bedeutet, $R_4$ $C_1$-$C_4$-Alkyl oder Phenyl bedeutet,

$R_5$ $C_1$-$C_{10}$-Alkylen bedeutet und $R_6$ $C_1$-$C_{12}$-Alkyl, Phenyl, $C_7$-$C_{18}$-Alkylphenyl oder $C_7$-$C_{10}$-Phenylalkyl bedeutet.

Hierzu gehören die Hydroxylgruppen enthaltenden Diketone der EP-A-346 279 und die Oxa- und Thia-diketone der EP-A-307 358.

$R_1$ und $R_3$ als Alkyl können insbesondere $C_1$-$C_{18}$-Alkyl sein, wie z.B. Methyl, Ethyl, n-Propyl, Isopropyl, n-Butyl, tert. Butyl, Pentyl, Hexyl, Heptyl, Octyl, Decyl, Dodecyl oder Octadecyl.

$R_1$ und $R_3$ als Hydroxyalkyl stellen insbesondere eine Gruppe $-(CH_2)_n$-OH dar, worin n 5, 6 oder 7 ist.

$R_1$ und $R_3$ als Alkenyl können beispielsweise Vinyl, Allyl, Methallyl, 1-Butenyl, 1-Hexenyl oder Oleyl bedeuten, vorzugsweise Allyl.

$R_1$ und $R_3$ als durch OH, Alkyl, Alkoxy oder Halogen substituiertes Phenyl können beispielsweise Tolyl, Xylyl, tert. Butylphenyl, Methoxyphenyl, Ethoxyphenyl, Hydroxyphenyl, Chlorphenyl oder Dichlorphenyl sein.

$R_1$ und $R_3$ als Phenylalkyl sind insbesondere Benzyl. $R_2$ und $R_3$ als Cycloalkyl oder Alkylcycloalkyl sind insbesondere Cyclohexyl oder Methylcyclohexyl.

$R_2$ als Alkyl kann insbesondere $C_1$-$C_4$-Alkyl sein. $R_2$ als $C_2$-$C_{12}$-Alkenyl kann insbesondere Allyl sein. $R_2$ als Alkylphenyl kann insbesondere Tolyl sein. $R_2$ als Phenylalkyl kann insbesondere Benzyl sein. Vorzugsweise ist $R_2$ Wasserstoff. $R_3$ als Alkoxy kann z.B. Methoxy, Ethoxy, Butoxy, Hexyloxy, Octyloxy, Dodecyloxy, Tridecyloxy, Tetradecyloxy oder Octadecyloxy sein. $R_5$ als $C_1$-$C_{10}$-Alkylen ist insbesondere $C_2$-$C_4$-Alkylen. $R_6$ als Alkyl ist insbesondere $C_4$-$C_{12}$-Alkyl, wie z.B. Butyl, Hexyl, Octyl, Decyl oder Dodecyl. $R_6$ als Alkylphenyl ist insbesondere Tolyl. $R_6$ als Phenylalkyl ist insbesondere Benzyl.

Beispiele für 1,3-Dicarbonylverbindungen der Formel (III) sind Acetylaceton, Acetylcyclopentanon, Benzoylcyclopentanon, Acetylbutyrolacton, Benzoylbutyrolacton, Butanoylaceton, Heptanoylaceton, Stearoylaceton, Palmitoylaceton, Lauroylaceton, 7-tert.Nonythioheptandion-2,4, Benzoylaceton, Dibenzoylmethan, Lauroylbenzoylmethan, Palmitoylbenzoylmethan, Stearoyl-benzoylmethan, 5-Hydroxycapronyl-benzoylmethan, Tribenzoylmethan, Bis(4-methylbenzoyl)methan, Benzoyl-p-chlorbenzoylmethan, Bis(2-hydroxybenzoyl)methan, 4-Methoxybenzoyl-benzoylmethan, Bis(4-methoxybenzoyl)methan, 1-Benzoyl-1-acetylnonan, Benzoyl-acetyl-phenylmethan, Stearoyl-4-methoxybenzoylmethan, Bis(4-tert-butylbenzoyl)methan, Benzoyl-formylmethan, Benzoyl-phenylacetylmethan, Bis(cyclohexanoyl)methan, Di(pivaloyl)methan, Acetessigsäure-methylester, -ethylester,-hexylester, -octylester, -dodecylester oder -octadecylester, Benzoylessigsäure-ethylester,-butylester, -2-ethylhexylester, -dodecylester oder -octadecylester, Stearoylessigsäure-ethyl-, -propyl-, -butyl-, -hexyl- oder -octylester und Dehydracetsäure sowie deren Magnesium-, Calcium-, Zink- oder Aluminiumsalze.

Bevorzugt sind 1,3-Diketoverbindungen der Formel (III), worin $R_1$ $C_1$-$C_{18}$-Alkyl, Phenyl, durch OH, Methyl oder Methoxy substituiertes Phenyl, $C_7$-$C_{10}$-Phenylalkyl oder Cyclohexyl ist, $R_2$ Wasserstoff ist und $R_3$ eine der für $R_1$ gegebenen Bedeutungen hat.

Besonders bevorzugt sind Magnesium- und Calciumacetylacetonate, sowie Zn- und Al-acetylacetonate, Stearoylbenzoylmethan, Dibenzoylmethan, Benzoyloctanoylmethan sowie der Trisacetessigester des Trisethylisocyanurats wie in US4,339,383 beschrieben. Eine zusammenfassende Übersicht über 1,3-Diketoverbindungen ist in EP-A-006318, EP-A-0046161, EP-A-0035268 und EP-A-0040286 gegeben.

Die 1,3-Diketoverbindungen können in einer Menge von beispielsweise 0,01 bis 10, zweckmässig 0,01 bis 2 und insbesondere 0,05 bis 1 Gew.-Teilen, bezogen auf 100 Gew.- Teile PVC, angewendet werden.

Weitere mögliche zusätzlich verwendbare Stabilisatoren sind 1,3-Ketoester der Formel(IV)

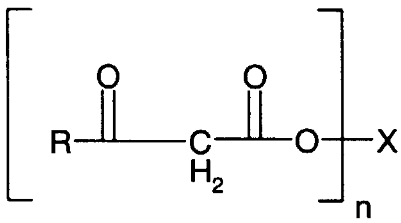

(IV)

worin n1, 2, 3, 4 oder 6 ist und, wenn n=1 ist, R Phenyl und X eine Alkylgruppe mit 10 bis 20 C-Atomen, wenn n = 2 ist, R Alkyl mit 1 bis 4 C-Atomen oder Phenyl und X Alkylen mit 4 bis 12 C-Atomen, Alkylen mit 2 bis 12 C-Atomen, das mit wenigstens einer $C_1$-$C_8$-Alkylgruppe substituiert ist, $-CH_2-CH_2-S-CH_2-CH_2-S-CH_2-CH_2-$ oder $-CH_2-CH_2-S-CH_2-CH_2-$, wenn n=3 ist, R Alkyl mit 1 bis 4 C-Atomen oder Phenyl und X $CH_3CH_2C(CH_2-)_3$, wenn n=4 ist, R Alkyl mit 1 bis 4 C-Atomen oder Phenyl undX eine Gruppe

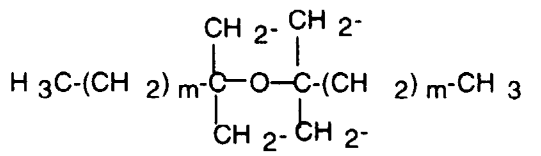

,

worin m0 oder 1 ist, und wenn n=6 ist, R Alkyl mit 1 bis 4 C-Atomen oder Phenyl undX die Gruppe

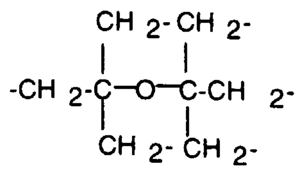

darstellen.

R als Alkyl mit 1 bis 4 C-Atomen bedeutet z.B. Methyl, Ethyl, Propyl oder Butyl.

X als Alkyl mit 10 bis 20 C-Atomen kann geradkettig oder verzweigt sein und bedeutet beispielsweise n-Decyl, n-Dodecyl oder n-Octadecyl.

X bedeutet als $C_4$-$C_{12}$-Alkylen, resp. als $C_2$-$C_{12}$-Alkylen, das durch wenigstens eine $C_1$-$C_8$-Alkylgruppe substituiert ist, zum Beispiel 1,2-Di-tert-butyl-dimethylen, Tetramethylen, Hexamethylen, 2,2-Dimethyltrimethylen, 2-Ethyl-2-butyltrimethylen, 2-Methyl-2-propyltrimethylen, Octamethylen, Nonamethylen, Decamethylen oder Dodecamethylen.

Die Variable n bedeutet bevorzugt 1, 2 oder3 wie in EP 0433230 beschrieben.

Weitere mögliche zusätzlich verwendbare Stabilisatoren sind Verbindungen der Formel(V)

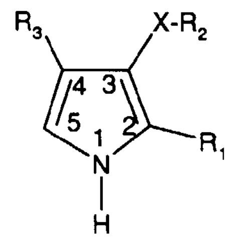

(V)

worin X eine Gruppe

-C(O)-, -S-, -S(O)- oder -$S(O)_2$-

bedeutet, $R_1$ und $R_2$ unabhängig voneinander $C_1$-$C_{20}$-Alkyl, durch Hydroxy und/oder Halogen substituiertes $C_1$-$C_{10}$-Alkyl, $C_3$-$C_{20}$-Alkenyl, $C_5$-$C_{12}$-Cycloalkyl, durch $C_1$-$C_4$-Alkyl substituiertes $C_5$-$C_8$-Cycloalkyl, Phenyl oder durch 1 bis 3 Reste $A_1$ substituiertes Phenyl sind, wobei die Reste $A_1$ unabhängig voneinander $C_1$-$C_{10}$-Alkyl, Halogen, Hydroxy, Methoxy oder Ethoxy bedeuten,

$R_1$ und $R_2$ ferner $C_7$-$C_{10}$-Phenylalkyl oder am Phenyl durch 1 bis3 Reste $A_2$ substituiertes $C_7$-$C_{10}$-Phenylalkyl sind, wobei die Reste $A_2$ unabhängig voneinander $C_1$-$C_{20}$-Alkyl, Halogen, Hydroxy, Methoxy oder Ethoxy bedeuten, und

$R_3$ Phenyl oder durch 1 bis 3 Reste $A_3$ substituiertes Phenyl ist, wobei die Reste $A_3$ unabhängig voneinander $C_1$-$C_{10}$-Alkyl, Halogen, Hydroxy, Methoxy, Ethoxy oder ($C_1$-$C_8$-Alkyl)oxycarbonyl sind, mit den Bedingungen, dass mindestens einer der Reste$R_1$ und$R_2$ Phenyl oder definitionsgemäss substituiertes Phenyl ist und $R_1$ verschieden von Methyl ist, wenn $R_2$ Phenyl bedeutet.

Die Verbindungen der obigen Formel zeichnen sich durch eine sehr gute stabilisierende Wirkung sowohl gegen thermischen als auch lichtinduzierten Abbau aus. Besonders bemerkenswert ist die langzeitstabilisierende Wirkung gegen thermischen Abbau.

Vorzugsweise ist $R_1$ verschieden von $C_1$-$C_3$-Alkyl, insbesondere $C_1$-$C_{20}$-Alkyl, wenn $R_2$ Phenyl bedeutet.

Halogen bedeutet bevorzugt Chlor.

Alkyl mit bis zu 20 C-Atomen bedeutet zum Beispiel Methyl, Ethyl, Propyl, Butyl, t-Butyl, Pentyl, Hexyl, Heptyl, Octyl, i-Octyl, i-Nonyl, Decyl, Dodecyl oder Octadecyl.

Durch Hydroxy und/oder Halogen substituiertes $C_1$-$C_{10}$-Alkyl bedeutet zum Beispiel 5-Hydroxypentyl, 2,3,5-Trihydroxypentyl oder 5-Chlorpentyl.

$C_3$-$C_{20}$-Alkenyl ist beispielsweise Allyl, 2-Methallyl, 3-Methylbut-2-enyl, 3-Methybut-3-enyl, Hexenyl, Decenyl, Undecenyl, Heptadecenyl oder Oleyl. Bevorzugte Bedeutungen sind Allyl, Methallyl und Oleyl.

$C_5$-$C_{12}$-Cycloalkyl bedeutet zum Beispiel Cyclopentyl, Cyclohexyl, Cycloheptyl, Cyclooctyl, Cyclodecyl oder Cyclododecyl. $C_5$-$C_7$-Cycloalkyl, insbesondere Cyclohexyl, ist bevorzugt.

$C_5$-$C_8$-Cycloalkyl, welches durch $C_1$-$C_4$-Alkyl, insbesondere Methyl substituiert ist, bedeutet zum Beispiel Methylcyclohexyl oder tert-Butylcyclohexyl.

Beispiele für Phenyl, welches durch 1 bis 3 definitionsgemässe Reste substituiert ist, sind o-, m- oder p-Methylphenyl, 2,3-Dimethylphenyl, 2,4-Dimethylphenyl, 2,5-Dimethylphenyl, 2,6-Dimethylphenyl, 3,4-Dimethylphenyl, 3,5-Dimethylphenyl, 2-Methyl-6-ethylphenyl, 2-Methyl-4-tert-butylphenyl, 2-Ethylphenyl, 2,6-Diethylphenyl, 2,6-Diethyl-4-methylphenyl, 2,6-Diisopropylphenyl, 4-tert-Butylphenyl, p-Nonylphenyl, o-, m- oder p-Chlorphenyl, 2,3-Dichlorphenyl, 2,4-Dichlorphenyl, 2,5-Dichlorphenyl, 2,6-Dichlorphenyl, 3,4-Dichlorphenyl, 2,4,5-Trichlorphenyl, 2,4,6-Trichlorphenyl, o-, m- oder p-Hydroxyphenyl, o-, m- oder p-Methoxyphenyl, o- oder p-Ethoxyphenyl, 2,4-Dimethoxyphenyl, 2,5-Dimethoxyphenyl, 2,5-Diethoxyphenyl, o-, m- oder p-Methoxycarbonyl, 2-Chlor-6-methylphenyl, 3-Chlor-2-methylphenyl, 3-Chlor-4-methylphenyl, 4-Chlor-2-methylphenyl, 5-Chlor-2-methylphenyl, 2,6-Dichlor-3-methylphenyl, 2-Hydroxy-4-methylphenyl, 3-Hydroxy-4-methylphenyl, 2-Methoxy-5-methylphenyl, 4-Methoxy-2-methylphenyl, 3-Chlor-4-methoxyphenyl, 3-Chlor-6-methoxyphenyl, 3-Chlor-4,6-dimethoxyphenyl und 4-Chlor-2,5-dimethoxyphenyl.

$C_7$-$C_{10}$-Phenylalkyl ist zum Beispiel Benzyl oder 2-Phenylethyl. Benzyl ist bevorzugt. Falls die Phenylgruppe in diesen Resten durch 1 bis 3 definitionsgemässe Gruppen substituiert ist, kann sie die oben angegebenen Bedeutungen annehmen. An der Phenylgruppe durch $C_1$-$C_{20}$-Alkyl, bevorzugt $C_8$-$C_{14}$-Alkyl, substituiertes $C_7$-$C_{10}$-Phenylalkyl ist eine der bevorzugten Bedeutungen. Als Beispiel ist ferner Dodecylbenzyl zu nennen. Eine genauere Ausführung ist EP0465405 zu entnehmen.

Weitere mögliche zusätzlich verwendbare Stabilisatoren sind Pyrrole der Formel(VI)

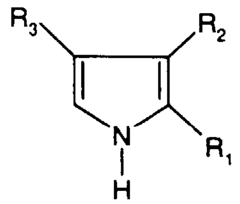

(VI)

worin R1 Wasserstoff, Alkyl, Cycloalkyl, Aryl, Alkoxycarbonylmethyl, gegebenenfalls verestertes α-Hydroxyalkyl, gegebenenfalls verestertes α-Hydroxycycloalkylmethyl, gegebenenfalls verestertes α-Hydroxyaralkyl, Alkoxymethyl, Alkylthiomethyl, Aryloxymethyl, Arylthiomethyl, Cycloalkoxymethyl, Cycloalkylthiomethyl, Aralkoxymethyl, Aralkylthiomethyl, Alkoxy, Alkylthio, Cycloalkoxy, Cycloalkylthio, Aralkoxy, Arylalkythio, Aryloxy, Arylthio, Halogen, Mercapto, Mercaptomethyl oder Hydroxy ist, $R_2$ Wasserstoff, Alkyl, Cycloalkyl, Aryl, gegebenenfalls verestertes α-Hydroxyalkyl, wobei dessen Alkylteil zusammen mit $R_1$ Alkylen sein kann, gegebenenfalls verestertes α-Hydroxycycloalkylmethyl, gegebenenfalls verestertes α-Hydroxyaralkyl, Alkoxy, Cycloalkyloxy, Aralkoxy, Aryloxy, Alkylthio, Cycloalkylthio, Aralkylthio, Arylthio, Alkoxymethyl, Alkylthiomethyl, Aryloxymethyl, Arylthiomethyl, Cycloalkoxymethyl, Cycloalkylthiomethyl, Aralkoxymethyl, Arylalkylthiomethyl, Hydroxy, Cyano, Carboxyl, versalztes, verestertes oder amidiertes Carboxyl oder Acyl ist, wobei Acyl zusammen mit $R_1$ -CO- Alkylen sein kann, worin -CO- in 3-Stellung gebunden ist, oder Halogen, Mercapto oder Mercaptomethyl ist, und $R_3$ Alkyl, Cycloalkyl, Aralkyl, Aryl, gegebenenfalls verestertes Hydroxymethyl, Alkoxymethyl, Alkylthiomethyl, Cycloalkoxymethyl, Cycloalkylthiomethyl, Aralkoxymethyl, Arylalkylthiomethyl, Aryloxymethyl oder Arylthiomethyl, Alkoxy, Alkylthio, Cycloalkoxy, Cycloalkylthio, Aralkoxy, Aralkylthio, Aryloxy, Arylthio, Halogen, Mercapto oder Mercaptomethyl ist, oder wenn $R_2$ versalztes Carboxyl ist, $R_3$ Wasserstoff ist und $R_1$ die angegebene Bedeutung hat, oder worin $R_3$ Hydroxy ist, und $R_1$ Wasserstoff, Alkyl oder Aryl ist und $R_2$ Wasserstoff, Alkyl, Aryl oder Acyl ist, oder ein Salz davon. Eine Ausführung hierzu gibt EP0022087.

Weitere mögliche zusätzlich verwendbare Stabilisatoren sind Verbindungen der Formel(VII)

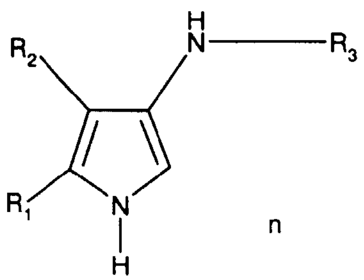

(VII)

worin n 1 oder 2 ist, $R_1$ $C_1$-$C_4$-Alkyl bedeutet, $R_2$ eine Gruppe der Formel IIa, IIb, IIc oder IId darstellt,
-C(O)O$X_1$-, IIa, -C(O)NH$X_2$, IIb, -C(S)NH$X_2$, IIc, -C(O)$X_3$ IId,
$X_1$ Wasserstoff, $C_1$-$C_{20}$-Alkyl, durch ein oder zwei Sauerstoffatome oder Schwefelatome unterbrochenes oder/und durch OH substituiertes $C_3$-$C_6$-Alkyl, $C_3$-$C_{20}$-Alkenyl, $C_5$-$C_{12}$-Cycloalkyl, durch $C_1$-$C_4$-Alkyl substituiertes $C_5$-$C_{12}$-Cycloalkyl, Phenyl, durch $C_1$-$C_{10}$-Alkyl, Chlor, Hydroxy, Methoxy oder/und Ethoxy substituiertes Phenyl, $C_7$-$C_{10}$-Phenylalkyl oder am Phenylrest durch $C_1$-$C_{20}$-Alkyl, Chlor, Hydroxy, Methoxy oder/und Ethoxy substituiertes $C_7$-$C_{10}$-Phenylalkyl ist, $X_2$ Phenyl oder durch 1 bis 3 Reste substituiertes Phenyl darstellt, wobei die Reste ausgewählt werden aus der Gruppe bestehend aus $C_1$-$C_4$-Alkyl, Chlor, Hydroxy, Methoxy, Ethoxy und Acetylamino, $X_3$ $C_1$-$C_8$-Alkyl oder Phenyl bedeutet, wenn n 1 ist, $R_3$ eine Gruppe der Formeln IIIa bis IIIg bedeutet,
-C(O)=C$Y_1Y_2$, IIIa, -C(O)$Y_3$, IIIb, -C(S)$Y_4$, IIIc, -C(O)$X_0Y_5$, IIId, -C(O)-C(O)$Y_6$, IIIe, -S(O)$_2Y_7$, IIIf,

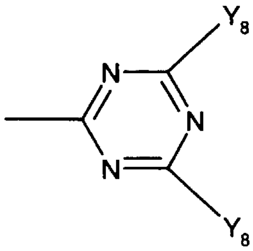

IIIg,

$X_0$ ein Sauerstoffatom oder Schwefelatom ist, $Y_1$ und $Y_2$ unabhängig voneinander -CN, Benzoyl, $C_2$-$C_4$-Alkanoyl oder $C_2$-$C_4$-Alkoxycarbonyl sind, $Y_3$ $C_1$-$C_{20}$-Alkyl, $C_3$-$C_{20}$-Alkenyl, Phenyl, durch $C_1$-$C_4$-Alkyl, Chlor, $-NO_2$, Methoxy oder/und Ethoxy substituiertes Phenyl, 2-Phenylethenyl, Di($C_1$-$C_4$-alkyl)amino, Diphenylamino, $C_1$-$C_{20}$-Alkylamino, $C_3$-$C_8$-Cycloalkylamino, Phenylamino, am Phenylring durch $C_1$-$C_4$-Alkyl, Chlor, Hydroxy, Methoxy oder/und Ethoxy substituiertes Phenylamino, Benzylamino, Benzolsulfonamido oder Toluolsulfonamido darstellt, $Y_4$ Di($C_1$-$C_4$-alkyl)amino, Diphenylamino, $C_1$-$C_8$-Alkylamino, Phenylamino, am Phenylring durch $C_1$-$C_4$-Alkyl, Chlor, Hydroxy, Methoxy oder/ und Ethoxy substituiertes Phenylamino oder Benzylamino ist, $Y_5$ $C_1$-$C_{20}$-Alkyl, durch ein oder zwei Sauerstoffatome unterbrochenes $C_3$-$C_6$-Alkyl, $C_5$-$C_{12}$-Cycloalkyl, durch $C_1$-$C_4$-Alkyl substituiertes $C_5$-$C_{12}$-Cycloalkyl, Phenyl, $C_7$-$C_{10}$-Phenylalkyl oder am Phenylrest durch $C_1$-$C_{20}$-Alkyl substituiertes $C_7$-$C_{10}$-Phenylalkyl bedeutet, $Y_6$ $C_1$-$C_4$-Alkoxy, Phenylamino oder an der Phenylgruppe durch $C_1$-$C_4$-Alkyl, Chlor, Hydroxy, Methoxy oder/und Ethoxy substituiertes Phenylamino ist, $Y_7$ $C_1$-$C_4$-Alkyl, Phenyl oder durch $C_1$-$C_4$-Alkyl, Chlor, $-NO_2$, ($C_1$-$C_{12}$-Alkyl)-oxycarbonyl und/oder Phenyloxycarbonyl substituiertes Phenyl darstellt, die Reste $Y_8$ unabhängig voneinander $C_1$-$C_4$-Alkoxy oder Allyloxy bedeuten, und wenn n 2 ist, $R_3$ eine Gruppe der Formel IVa, IVb, IVc oder IVd darstellt,

$-C(X_0)-Z_1-C(X_0)-$, IVa, $-C(O)O-Z_2-O-C(O)-$, IVb, $-C(X_0)NH-Z_3-NH-C(X_0)-$, IVc,

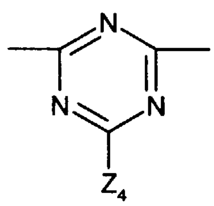

, IVd,

$X_0$ die oben angegebene Bedeutung besitzt, $Z_1$ eine direkte Bindung, $C_1$-$C_{12}$-Alkylen oder Phenylen bedeutet, $Z_2$ $C_2$-$C_{12}$-Alkylen oder 3-Oxapentylen ist, $Z_3$ $C_4$-$C_8$-Alkylen oder Phenylen und $Z_4$ $C_1$-$C_4$-Alkoxy oder Allyloxy darstellen.

Alkyl mit bis zu 20 C-Atomen bedeutet zum Beispiel Methyl, Ethyl, Propyl, Butyl, t-Butyl, Pentyl, Hexyl, Heptyl, Octyl, i-Octyl, i-Nonyl, Decyl, Dodecyl oder Octadecyl.

$R_1$ bedeutet vorzugsweise geradkettiges $C_1$-$C_4$-Alkyl, insbesondere Methyl.

Eine bevorzugte Bedeutung von $X_1$ ist $C_1$-$C_{18}$-Alkyl, insbesondere $C_1$-$C_{12}$-Alkyl, z.B. Methyl oder Ethyl.

$X_3$ bedeutet als Alkyl vorzugsweise Methyl oder Ethyl, insbesondere Methyl.

$Y_5$ besitzt als Alkyl vorzugsweise 1 bis 4 Kohlenstoffatome. Methyl und Ethyl sind besonders bevorzugte Bedeutungen für $Y_5$.

$C_1$-$C_4$-Alkoxy ist z.B. Methoxy, Ethoxy, Propoxy oder Butoxy.

$C_3$-$C_6$-Alkyl, welches durch 1 oder 2 Sauerstoffatome unterbrochen ist, bedeutet beispielsweise 3-Oxabutyl, 3-Oxapentyl, 3-Oxaheptyl, 3,6-Dioxaheptyl oder 3,6-Dioxaoctyl.

$C_3$-$C_6$-Alkyl, welches durch 1 oder 2 Sauerstoffatome oder Schwefelatome unterbrochen oder/und durch OH substituiert ist, kann zum Beispiel ausser den im vorangehenden Absatz angegebenen Resten auch 3-Thiabutyl, 3-Thiapentyl, 3,6-Dithiaheptyl, 3,6-Dithiaoctyl, 5-Hydroxy-3-oxapentyl, 5-Hydroxy-3-thiapentyl oder 4-Hydroxybutyl bedeuten.

$C_3$-$C_{20}$-Alkenyl ist beispielsweise Allyl, 2-Methallyl, 3-Methylbut-2-enyl, 3-Methylbut-3-enyl, Hexenyl, Decenyl, Undecenyl, Heptadecenyl oder Oleyl. Bevorzugte Bedeutungen sind Allyl, Methallyl und Oleyl.

$C_5$-$C_{12}$-Cycloalkyl, welches gegebenenfalls durch $C_1$-$C_4$-Alkyl, insbesondere Methyl, substituiert sein kann, bedeutet zum Beispiel Cyclopentyl, Cyclohexyl, Cycloheptyl, Cyclooctyl, Cyclodecyl, Cyclododecyl oder Methylcyclohexyl. Unsubstituiertes oder substituiertes $C_5$-$C_8$-Cycloalkyl, insbesondere Cyclohexyl, ist bevorzugt.

Beispiele für Phenyl, welches durch, bevorzugt 1 bis 3, definitionsgemässe Reste substituiert ist, sind o-, m- oder p-Chlorphenyl, 2,3-Dichlorphenyl, 2,4-Dichlorphenyl, 2,5-Dichlorphenyl, 2,6-Dichlorphenyl, 3,4-Dichlorphenyl, 2,4,5-Trichlorphenyl, 2,4,6-Trichlorphenyl, o-, m-oder p-Methylphenyl, 2,3-Dimethylphenyl, 2,4-Dimethylphenyl, 2,5-Dimethylphenyl, 2,6-Dimethylphenyl, 3,4-Dimethylphenyl, 3,5-Dimethylphenyl, 2-Methyl-6-ethylphenyl, 2-Methyl-4-tert-butylphenyl, 2-Ethylphenyl, 2,6-Diethylphenyl, 2,6-Diethyl-4-methylphenyl, 2,6-Diisopropylphenyl, 4-tert-Butylphenyl, p-Nonylphenyl, 2-Chlor-6-methylphenyl, 3-Chlor-2-methylphenyl, 3-Chlor-4-methylphenyl, 4-Chlor-2-methylphenyl, 5-Chlor- 2-methylphenyl, 2,6-Dichlor-3-methylphenyl, o-, m- oder p-Methoxyphenyl, o-oder p-Ethoxyphenyl, 2,4-Dimethoxyphenyl, 2,5-Dimethoxyphenyl, 2,5-Diethoxyphenyl, 2-Methoxy-5-methylphenyl, 4-Methoxy-2-methylphenyl, 3-Chlor-4-methoxyphenyl, 3-Chlor-6-methoxyphenyl, 3-Chlor-4,6-dimethoxyphenyl, 4-Chlor-2,5-dimethoxyphenyl, o-, m- oder p-Hydroxyphenyl, 2-Hydroxy-4-methylphenyl, 3-Hydroxy-4-methylphenyl, o-, m- oder p-Acetylaminophenyl, o-, m- oder p-Nitrophenyl, p-($C_1$-$C_{12}$-Alkyl)oxycarbonylphenyl und p-Phenybxycarbonylphenyl.

Bedeuten $Y_3$, $Y_4$ und $Y_6$ Phenylamino, welches am Phenylrest durch, bevorzugt 1 bis 3, definitionsgemässe Reste substituiert ist, so kann der substituierte Phenylrest z.B. die oben angegebenen Bedeutungen besitzen.

$C_7$-$C_{10}$-Phenylalkyl ist zum Beispiel Benzyl oder 2-Phenylethyl. Benzyl ist bevorzugt. Falls die Phenylgruppe in diesen Resten durch, bevorzugt 1 bis 3, definitionsgemässe Gruppen substituiert ist, kann sie die oben angegebenen Bedeutungen annehmen. An der Phenylgruppe durch $C_1$-$C_{20}$-Alkyl, bevorzugt $C_8$-$C_{14}$-Alkyl, substituiertes $C_7$-$C_{10}$-Phenylalkyl ist eine der bevorzugten Bedeutungen. Als Beispiel ist ferner Dodecylbenzyl zu nennen.

$C_2$-$C_4$-Alkanoyl bedeutet beispielsweise Acetyl, Propanoyl oder Butanoyl. Acetyl ist bevorzugt.

$C_2$-$C_4$-Alkoxycarbonyl ist zum Beispiel Methoxycarbonyl, Ethoxycarbonyl der Propoxycarbonyl. Methoxycarbonyl und Ethoxycarbonyl sind bevorzugt.

Di($C_1$-$C_4$-alkyl)amino bedeutet zum Beispiel Dimethylamino, Diethylamino, Dipropylamino oder Dibutylamino.

$C_1$-$C_{20}$-Alkylamino, bevorzugt $C_1$-$C_8$-Alkylamino, insbesondere $C_4$-$C_8$-Alkylamino, ist beispielsweise Butylamino, Pentylamino, Hexylamino, Heptylamino oder Octylamino.

$C_3$-$C_8$-Cycloalkylamino ist zum Beispiel Cyclopropylamino, Cyclohexylamino oder Cyclooctylamino.

Alkylen mit bis zu 12 Kohlenstoffatomen bedeutet zum Beispiel Methylen, Dimethylen, Trimethylen, Butylen, Pentamethylen, Hexamethylen, Octamethylen, Decamethylen oder Dodecamethylen. Alkylen mit bis zu 8 Kohlenstoffatomen ist bevorzugt. Eine Zusammenfassung ist in US5155152 enthalten.

Weitere mögliche zusätzlich verwendbare Stabilisatoren sind Verbindungen der Formel a und b

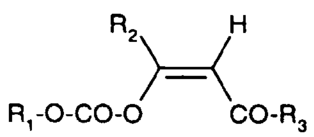 (a), 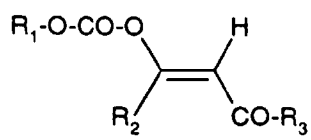 (b),

worin $R^1$ $C_1$-$C_{22}$-Alkyl, Phenyl, durch ein oder zwei $C_1$-$C_9$-Alkyl substituiertes Phenyl, $C_5$-$C_7$-Cycloalkyl oder eine Gruppe der Formeln A oder B ist

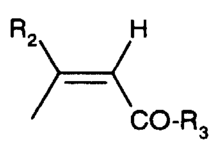 (A), 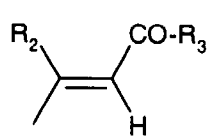 (B),

oder $R^1$ eine Gruppe der Formeln ca oder cb ist

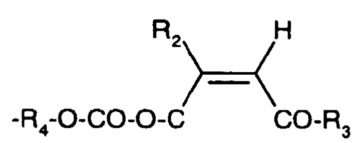 (ca),

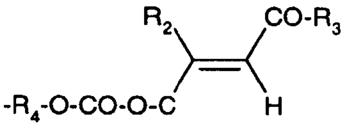

(cb),

$R_2$ und $R_3$ unabhängig voneinander $C_1$-$C_{20}$-Alkyl, Phenyl, durch ein oder zwei $C_1$-$C_9$-Alkyl substituiertes Phenyl oder $C_5$-$C_7$-Cycloalkyl sind und $R_4$ $C_2$-$C_{12}$-Alkylen ist. Weiterführende Erläuterungen, Beispiele und Bevorzugungen sind der EP 224 438 zu entnehmen.

Weitere Stabilisatoren sind Triazole der Formel

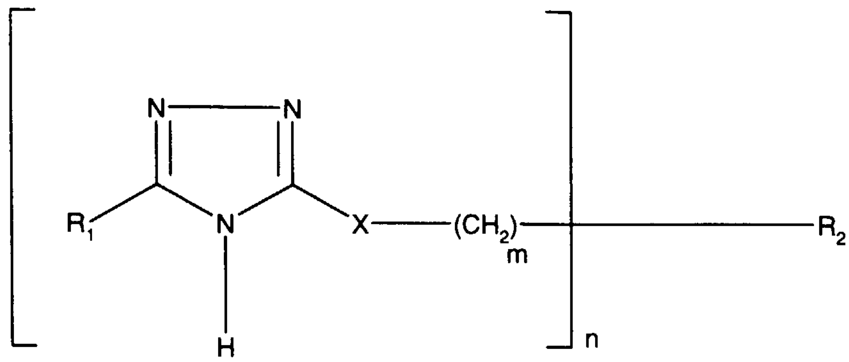

oder der Formel

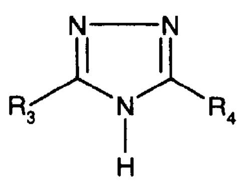

worin $R_1$ Wasserstoff, Hydroxy, $C_1$-$C_6$-Alkoxy, Carboxy, $C_2$-$C_6$-Alkoxycarbonyl, Merkapto, $C_1$-$C_6$-Alkylthio oder eine Gruppe -S-$CH_2$-COOH oder -S-$CH_2$-COO-Alkyl($C_1$-$C_6$) bedeutet, X Thio, Methylen oder die Gruppe -COO- oder -S-$CH_2$-COO-, jeweils durch das Estersauerstoffatom an das Alkyl gebunden, ist, m eine ganze Zahl von 1 bis 20 ist, n 1 oder 2 ist, $R_2$, falls einwertig, Wasserstoff, Hydroxy oder Merkapto bedeutet und, falls zweiwertig eine direkte Bindung, Imino, $C_1$-$C_6$-Alkylimino, Oxy, Thio oder Methylen ist, $R_3$ Wasserstoff, Amino, Merkapto oder $C_1$-$C_{12}$-Alkylthio ist und, falls $R_3$ Wasserstoff bedeutet, $R_4$ Wasserstoff, -$COOR_5$, worin $R_5$ Wasserstoff, $C_1$-$C_8$-Alkyl oder -$CH_2$-COO-Alkyl($C_1$-$C_8$) ist, oder -S-$R_6$, wobei $R_6$ Wasserstoff, $C_1$-$C_{12}$-Alkyl, -$CH_2$-COO-Alkyl($C_1$-$C_8$) oder $C_1$-$C_{12}$-Alkylthio ist oder -NH-X'-NH-

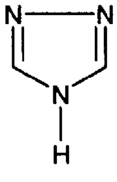

ist, worin X' für die Gruppe -CO-NH-Alkylen-NH-CO-, -CO- Alkylen-S-Alkylen-CO mit jeweils 1-12 C-Atomen in der Alkylenkette oder für ($C_1$-$C_{12}$)-Alkylen steht, falls $R_3$ $NH_2$ ist, $R_4$ $C_1$-$C_4$-Alkyl, Merkapto, $C_1$-$C_4$-Alkylthio oder -S-Alkylen-S-

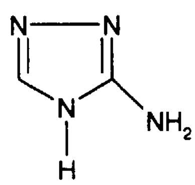

mit 1-12 C-Atomen in der Alkylenkette bedeutet, falls $R_3$ Merkapto ist, $R_4$ gegebenenfalls substituiertes Phenyl bedeutet, und falls $R_3$ $C_1$-$C_{12}$-Alkylthio ist, $R_4$ für $C_1$-$C_4$-Alkyl, $C_1$-$C_{12}$-Alkylthio oder für gegebenenfalls substituiertes Phenyl steht.

Solche Stabilisatoren, weitere Ausführungsformen , Beispiele und Bevorzugungen sind aus der DE 30 48 659 ersichtlich.

Stabilisatorgemische bestehend aus einem Thioäther der Formel(VIII)

(VIII)

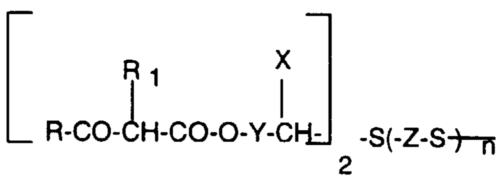

worin

n die Zahlen Null oder 1 bedeutet,
R $C_1$-$C_{18}$-Alkyl, $C_5$-$C_8$-Cycloalkyl, gegebenenfalls mit $C_1$-$C_4$-Alkyl substituiertes $C_6$-$C_{10}$-Aryl und
$R_1$ Wasserstoff oder $C_1$-$C_4$-Alkyl sind,
X als wiederholt vorkommendes Symbol gleich oder verschieden Wasserstoff oder eine Gruppe der Formel

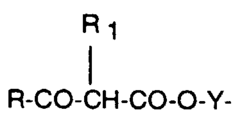

bedeutet,
Y als wiederholt vorkommendes Symbol gleich oder verschieden $C_1$-$C_6$-Alkylen oder eine Gruppe der Formel

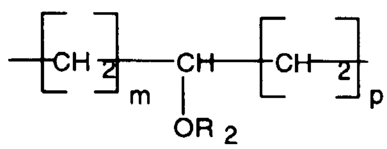

ist, wobei die $-(CH_2)_m$ Gruppe an das Sauerstoffatom gebunden ist und worin $R_2$ Wasserstoff oder eine Gruppe der Formel

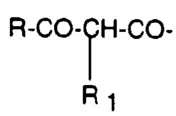

bedeutet, n die Zahlen 1 bis 4 und p die Zahlen Null bis 3 sein können, Z $C_1$-$C_6$-Alkylen oder eine Gruppe der Formel

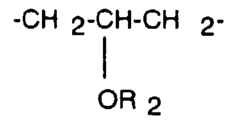

ist, und

b) einem ein Metall aus der Gruppe Zink, Calcium, Magnesium oder Antimon oder ferner auch Zink kombiniert mit mindestens einem der vorgenannten Metalle enthaltenden Stabilisator.

Weitere Ausführungen dazu, Beispiele und Bevorzugungen sind der EP-A-19 576 zu entnehmen.

Verbindungen der Formel(IX)

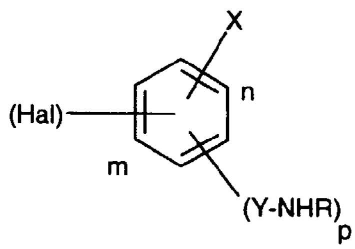

,

in welcher (IX)

m eine Zahl 0, 1 oder 2,

n eine Zahl 0, 2 oder 3 und

p eine Zahl 1 oder 2 sind

Hal für -F, -Cl, -Br oder -I steht,

X $-NH_2$, $-NHCH_3$ und/oder $-OCH_3$ oder $OC_2H_5$,

Y -CO- oder $-SO_2$- und

R -H, -OH, $-NH_2$, unsubstituiertes oder beispielsweise durch eine bis drei HO- und/oder $C_1$-$C_4$-Alkoxy- oder Phenoxygruppen substituiertes $C_1$-$C_{18}$-Alkyl, Phenyl, Benzyl oder Phenäthyl, oder R ferner eine Gruppe der Formel

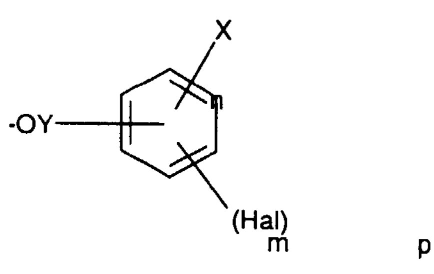

,

wobei

X, Y, m, n und Hal die oben angegebene Bedeutung haben. Detaillierte Beschreibungen, Beispiele und Bevorzugungen sind der EP 122 228 und der EP 174 412 zu entnehmen.

Stabilisatorengemische erhältlich durch Mischen mindestens einer Verbindung der Formel(X)

$$[ROOC\text{-}C_nH_{2n}S\text{-}]_3\ PX, \qquad (X)$$

in der X O oder S, n eine ganze Zahl von 1 bis 5 und R geradkettiges oder verzweigtes $C_1$-$C_{18}$-Alkyl oder substituiertes oder unsubstituiertes Cyclohexyl bedeuten, und mindestens eines PVC-Stabilisators vom Typ Me(II)-Carboxylat und/oder Me(II)-Phenolat, wobei Me(II) ein oder mehrere Metalle aus der Reihe Ba, Sr, Ca, Mg, Zn und Cd bedeutet, und wobei, bezogen auf das PVC, 0,01 - 2 Gew.-% der Verbindung der Formel I und 0,1-4 Gew.-% des Me(II)-Carboxylates und/oder Me(II)-Phenolates eingesetzt werden. Solche Stabilisatorgemische sind weiterführend in der EP 90 770 beschrieben, woraus auch Beispiele und Bevorzugungen ersichtlich sind.

Als organische Weichmacher kommen beispielsweise solche aus den folgenden Gruppen in Betracht:

A) Phthalate (Phthalsäureester)
Beispiele für solche Weichmacher sind Dimethyl-, Diethyl-, Dibutyl-, Dihexyl-, Di-2-ethylhexyl-, Di-n-octyl-, Di-iso-octyl-, Di-iso-nonyl-, Di-iso-decyl-, Di-iso-tridecyl-, Dicyclohexyl-, Di-methylcyclohexyl-, Dimethylglycol-, Dibutylglycol-, Benzylbutyl- und Diphenyl-phthalat sowie Mischungen von Phthalaten wie $C_7$-$C_9$- und $C_9$-$C_{11}$-Alkylphthalate aus überwiegend linearen Alkoholen, $C_6$-$C_{10}$-n-Alkylphthalate und $C_8$-$C_{10}$-n-Alkylphthalate. Bevorzugt sind davon Dibutyl-, Dihexyl-, Di-2-ethylhexyl-, Di-n-octyl-, Di-iso-octyl-, Di-iso-nonyl-, Di-iso-decyl-, Di-iso-tridecyl- und Benzylbutyl-phthalat sowie die genannten Mischungen von Alkylphthalaten. Besonders bevorzugt ist Di-2-ethylhexyl-, Di-iso-nonyl- und Di-iso-decylphthalat.

B) Ester aliphatischer Dicarbonsäuren, insbesondere Ester von Adipin-, Azelain- und Sebazinsäure
Beispiele für solche Weichmacher sind Di-2-ethylhexyladipat, Di-isooctyladipat (Gemisch), Di-iso-nonyladipat (Gemisch), Di-iso-decyladipat (Gemisch), Benzylbutyladipat, Benzyloctyladipat, Di-2-ethylhexylazelat, Di-2-ethylhexylsebacat und Di-iso-decylsebacat (Gemisch). Bevorzugt sind Di-2-ethylhexyladipat und Di-iso-octyladipat.

C) Trimellithsäureester,
beispielsweise Tri-2-ethylhexyltrimellithat, Tri-iso-decyltrimellithat (Gemisch), Tri-iso-tridecyltrimellithat, Tri-iso-octyltrimellithat (Gemisch) sowie Tri-$C_6$-$C_8$-alkyl, Tri-$C_6$-$C_{10}$-alkyl-, Tri-$C_7$-$C_9$-alkyl- und Tri-$C_9$-$C_{11}$-alkyl-trimellithate. Die letztgenannten Trimellithate entstehen durch Veresterung der Trimellithsäure mit den entsprechenden Alkanolgemischen. Bevorzugte Trimellithate sind Tri-2-ethylhexyltrimellithat und die genannten Trimellithate aus Alkanolgemischen.

D) Epoxyweichmacher wie 1,2-Epoxide und Oxirane; Beispiele dafür sind epoxidiertes Polybutadien, epoxidiertes Sojabohnenöl, epoxidiertes Leinsamenöl, epoxidiertes Fischöl, epoxidierter Talg, Methylbutyl- oder 2-Ethylhexylepoxystearat, Tris(epoxypropyl)isocyanurat, epoxidiertes Ricinusöl, epoxidiertes Sonnenblumenöl, 3-(2-Phenoxy)-1,2-epoxypropan, Bisphenol-A-polyglycidylether, Vinylcyclohexendiepoxyd, Dicyclopentaliendiepoxyd und 3,4-Epoxycyclohexylmethyl-3,4-epoxycyclohexancarboxylat.

E) Polymerweichmacher
Eine Definition dieser Weichmacher und Beispiele für solche sind im "Taschenbuch der Kunststoff-Additive", Herausgeber R. Gächter und H. Müller, Hanser Verlag, 1990, Seite 412, Kapitel 5.9.6 sowie in "PVC Technology ", Herausgeber W.V. Titow, 4th. Ed., Elsevier Publ., 1984, Seiten 165-170 angegeben. Die gebräuchlichsten Ausgangsmaterialien für die Herstellung der Polyesterweichmacher sind: Dicarbonsäuren wie Adipin-, Phthal-, Azelain- und Sebacinsäure; Diole wie 1,2-Propandiol, 1,3-Butandiol, 1,4-Butandiol, 1,6-Hexandiol, Neopentylglycol und Diethylenglykol; Monocarbonsäuren wie Essig-, Capron-, Capryl-, Laurin-, Myristin-, Palmitin-, Stearin-, Pelargon-und Benzoesäure; monofunktionelle Alkohole wie Isooctanol, 2-Ethylhexanol, Isodecanol sowie $C_7$-$C_9$-Alkanol- und $C_9$-$C_{11}$-Alkanolgemische. Besonders vorteilhaft sind Polyesterweichmacher aus den genannten Dicarbonsäuren und monofunktionellen Alkoholen.

F) Phosphorsäureester
Eine Definition dieser Ester ist im vorstehend genannten "Taschenbuch der Kunststoff-Additive" auf Seite 408, Kapitel 5.9.5 zu finden. Beispiele für solche Phosphorsäureester sind Tributylphosphat, Tri-2-ethylbutylphosphat, Tri-2-ethylhexylphosphat, Trichlorethylphosphat, 2-Ethyl-hexyl-di-phenylphosphat, Kresyldiphenylphosphat, Triphenylphosphat, Trikresylphosphat und Trixylenylphosphat. Bevorzugt ist Tri-2-ethylhexylphosphat und ®Reofos 50.

G) Chlorierte Kohlenwasserstoffe bzw. chlorierte Paraffine

H) Kohlenwasserstoffe (Paraffine)

I) Monoester, z.B. Butyloleat, Phenoxyethyloleat, Tetrahydrofurfuryloleat und Alkylsulfonsäureester.

J) Glykolester, z.B. Diglykolbenzoate oder allgemein Polyolvoll- und partialester.

Definitionen und Beispiele für Weichmacher der Gruppen G) bis J) sind den folgenden Handbüchern zu entnehmen:

"Taschenbuch der Kunststoff-Additive", Herausgeber R. Gächter und H. Müller, Hanser Verlag, 1990, Seite 422, Kapitel 5.9.14.2 (Gruppe G)), und Kapitel 5.9.14.1 (Gruppe H)).

"PVC Technology", Herausgeber W.V. Titow, 4th. Ed., Elsevier Publishers, 1984, Seiten 171-173, Kapitel 6.10.2 (Gruppe G)), Seite 174, Kapitel 6.10.5 (Gruppe H)), Seite 173, Kapitel 6.10.3 (Gruppe I)) und Seiten 173-174, Kapitel 6.10.4 (Gruppe J)).

Besonders bevorzugt sind Weichmacher aus den Gruppen A) bis F), insbesondere A) bis D) und F), vor allem die in diesen Gruppen als bevorzugt herausgestellten Weichmacher.

Es können auch Mischungen unterschiedlicher Weichmacher verwendet werden.

Die Weichmacher können in einer Menge von beispielsweise 1 bis 120, zweckmässig 1 bis 100 und insbesondere 2 bis 70 Gew.-Teilen, bezogen auf 100 Gew.-Teile PVC, angewendet werden.

Als Dihydropyridine kommen monomere und oligomere Verbindungen z.B. wie in EP-A-0362012, EP-A-0286887 und EP-A-0024754 beschrieben in Frage.

Als Perchlorate kommen Alkali- und Erdalkaliperchlorate sowie Zink- und Aluminiumperchlorate oder Perchlorate deren Kation aus einem tensidischen Ammonium- oder Phosphonium-Kation besteht,auch auf Trägern aufgezogen, z.B. wie in US5,034,443 beschrieben in Betracht. Zum Einsatz kommen können auch Addukte dieser Perchlorate mit ein- und mehrwertigen Alkoholen.

Als Antioxidantien kommen beispielsweise in Betracht:

1. Alkylierte Monophenole, z.B. 2,6-Di-tert-butyl-4-methylphenol, 2-butyl-4,6-dimethylphenol, 2,6-Di-tert-butyl-4-ethylphenol, 2,6-Di-tert-butyl-4-n-butylphenol, 2,6-Di-tert-butyl-4-iso-butylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-tert-butyl-4-methoxymethylphenol, 2,6-Di-nonyl-4-methylphenol, 2,4-Dimethyl-6-(1'-methyl-undec-1'-yl)-phenol, 2,4-Dimethyl-6-(1'-methyl-heptadec-1'-yl)-phenol, 2,4-Dimethyl-6-(1'-methyl-tridec-1'-yl)-phenol, Octylphenol, Nonylphenol und Mischungen davon.

2. Alkylthiomethylphenole, z.B. 2,4-Di-octylthiomethyl-6-tert-butylphenol, 2,4-Di-octylthiomethyl-6-methylphenol, 2,4-Di-octylthiomethyl-6-ethylphenol, 2,6-Di-dodecylthiomethyl-4-nonylphenol.

3. Hydrochinone und alkylierte Hydrochinone, z.B. 2,6-Di-tert-butyl-4-methoxyphenol, 2,5-Di-tert-butyl-hydrochinon, 2,5-Di-tert-amyl-hydrochinon, 2,6-Diphenyl-4-octadecyloxyphenol, 2,6-Di-tert-butyl-hydrochinon, 2,5-Di-tert-butyl-4-hydroxyanisol, 3,5-Di-tert-butyl-4-hydroxyanisol, 3,5-Di-tert-butyl-4-hydroxyphenyl-stearat, Bis-(3,5-di-tert-butyl-4-hydroxyphenyl)adipat.

4. Hydroxylierte Thiodiphenylether, z.B. 2,2'-Thio-bis-(6-tert-butyl-4-methylphenol), 2,2'-Thio-bis-(4-octylphenol), 4,4'-Thio-bis-(6-tert-butyl-3-methylphenol), 4,4'-Thio-bis-(6-tert-butyl-2-methylphenol), 4,4'-Thio-bis-(3,6-di-sec.-amylphenol), 4,4'-Bis-(2,6-dimethyl-4-hydroxyphenyl)-disulfid.

5. Alkyliden-Bisphenole, z.B. 2,2'-Methylen-bis-(6-tert-butyl-4-methylphenol), 2,2'-Methylen-bis-(6-tert-butyl-4-ethylphenol), 2,2'-Methylen-bis-[4-methyl-6-(α-methylcyclohexyl)-phenol], 2,2'-Methylen-bis-(4-methyl-6-cyclohexylphenol), 2,2'-Methylen-bis-(6-nonyl-4-methylphenol), 2,2'-Methylen-bis-(4,6-di-tert-butylphenol), 2,2'-Ethyliden-bis-(4,6-di-tert-butylphenol), 2,2'-Ethyliden-bis-(6-tert-butyl-4-isobutylphenol), 2,2'-Methylen-bis-[6-(α-methylbenzyl)-4-nonylphenol], 2,2'-Methylen-bis-[6-(α,α-dimethylbenzyl)-4-nonylphenol], 4,4'-Methylen-bis-(2,6-di-tert-butylphenol), 4,4'-Methylen-bis-(6-tert-butyl-2-methylphenol), 1,1-Bis-(5-tert-butyl-4-hydroxy-2-methylphenyl)-butan, 2,6-Bis-(3-tert-butyl-5-methyl-2-hydroxybenzyl)-4-methylphenol, 1,1,3-Tris-(5-tert-butyl-4-hydroxy-2-methylphenyl)-butan, 1,1-Bis-(5-tert-butyl-4-hydroxy-2-methyl-phenyl)-3-n-dodecylmercaptobutan, Ethylenglycol-bis-[3,3-bis-(3'-tert-butyl-4'-hydroxyphenyl)-butyrat], Bis-(3-tert-butyl-4-hydroxy-5-methyl-phenyl)-dicyclopentadien, Bis-[2-(3'-tert-butyl-2'-hydroxy-5'-methyl-benzyl)-6-tert-butyl-4-methyl-phenyl]-terephthalat, 1,1-Bis-(3,5-dimethyl-2-hydroxyphenyl)-butan, 2,2-Bis-(3,5-di-tert-butyl-4-hydroxyphenyl)-propan, 2,2-Bis-(4-hydroxyphenyl)-propan, 2,2-Bis-(5-tert-butyl-4-hydroxy-2-methylphenyl)-4-n-dodecylmercapto-butan,1,1,5,5-Tetra-(5-tert-butyl-4-hydroxy-2-methylphenyl)-pentan.

6. O-, N- und S-Benzylverbindungen, z.B. 3,5,3',5'-Tetra-tert-butyl-4,4'-dihydroxydibenzylether, Octadecyl-4-hydroxy-3,5-dimethylbenzyl-mercaptoacetat, Tris-(3,5-di-tert-butyl-4-hydroxybenzyl)-amin, Bis-(4-tert-butyl-3-hydroxy-2,6-dimethylbenzyl)-dithioterephthalat, Bis-(3,5-di-tert-butyl-4-hydroxybenzyl)-sulfid, Isooctyl-3,5-di-tert-butyl-4-hydroxybenzylmercaptoacetat.

7. Hydroxybenzylierte Malonate, z.B. Dioctadecyl-2,2-bis-(3,5-di-tert-butyl-2-hydroxybenzyl)-malonat, Di-octadecyl-2-(3-tert-butyl-4-hydroxy-5-methylbenzyl)-malonat, Di-dodecylmercaptoethyl-2,2-bis-(3,5-di-tert-butyl-4-hydroxybenzyl)-malonat, Di-[4-(1,1,3,3-tetramethylbutyl)-phenyl]-2,2-bis-(3,5-di-tert-butyl-4-hydroxybenzyl)-malonat.

8. Hydroxybenzyl-Aromaten, z.B. 1,3,5-Tris-(3,5-di-tert-butyl-4-hydroxybenzyl)-2,4,6-trimethylbenzol, 1,4-Bis-(3,5-di-tert-butyl-4-hydroxybenzyl)-2,3,5,6-tetramethylbenzol, 2,4,6-Tris-(3,5-di-tert-butyl-4-hydroxybenzyl)-phenol.

9. Triazinverbindungen, z.B. 2,4-Bis-octylmercapto-6-(3,5-di-tert-butyl-4-hydroxyanilino)-1,3,5-triazin, 2-Octylmercapto-4,6-bis-(3,5-di-tert-butyl-4-hydroxyanilino)-1,3,5-triazin, 2-Octylmercapto-4,6-bis-(3,5-di-tert-butyl-4-hydroxyphenoxy)- 1,3,5-triazin, 2,4,6-Tris-(3,5-di-tert-butyl-4-hydroxyphenoxy)-1,2,3-triazin, 1,3,5-Tris-(3,5-di-tert-butyl-4-hydroxybenzyl)-isocyanurat, 1,3,5-Tris-(4-tert-butyl-3-hydroxy-2,6-dimethylbenzyl)-isocyanurat, 2,4,6-Tris-(3,5-di-tert-butyl-4-hydroxyphenylethyl)-1,3,5-triazin, 1,3,5-Tris-(3,5-di-tert-butyl-4-hydroxyphenylpropionyl)-hexahydro-1,3,5-triazin, 1,3,5-Tris-(3,5-dicyclohexyl-4-hydroxybenzyl)-isocyanurat.

10. Phosphonate, Phosphite und Phosphonite, z.B. Dimethyl-2,5-di-tert-butyl-4-hydroxybenzylphosphonat, Diethyl-3,5-di-tert-butyl-4-hydroxybenzylphosphonat, Dioctadecyl-3,5-di-tert-butyl-4-hydroxybenzylphosphonat, Dioctadecyl-5-tert-butyl-4-hydroxy-3-methylbenzylphosphonat, Ca-Salz des 3,5-Di-tert-butyl-4-hydroxybenzylphosphonsäuremonoethylesters, Triphenylphosphit, Diphenylalkylphosphite, Phenyldialkylphosphite, Tris-(nonylphenyl)-phosphit, Trilaurylphosphit, Trioctadecylphosphit, Distearyl-pentaerythritdiphosphit, Tris-(2,4-di-tert-butylphenyl)-phosphit, Diisodecylpentaerythrit-diphosphit, Bis-(2,4-di-tert-butylphenyl)-pentaerythritdiphosphit, Bis-(2,6-di-tert-butyl-4-methylphenyl)-pentaerythritdiphosphit, Bis-isodecyloxy-pentaerythritdiphosphit, Bis-(2,4-di-tert-butyl-6-methylphenyl)-pentaerythritdiphosphit, Bis-(2,4,6-tri-tert-butylphenyl)-pentaerythritdiphosphit, Tristearyl-sorbit-triphosphit, Tetrakis-(2,4-di-tert-butylphenyl)-4,4'-biphenylen-diphosphonit, 6-Isooctyloxy-2,4,8,10-tetra-tert-butyl-12H-dibenz(d,g]-1,3,2-dioxaphosphocin, 6-Fluor-2,4,8,10-tetra-tert-butyl-12-methyl-dibenz[d,g]-1,3,2-dioxaphosphocin, Bis-(2,4-di-tert-butyl-6-methylphenyl)-methylphosphit, Bis-(2,4-di-tert-butyl-6-methylphenyl)-ethylphosphit, $(C_9H_{19}\text{-}C_6H_4)_{1,5}\text{-}P\text{-}(O\text{-}C_{12\text{-}13}H_{25\text{-}27})_{1,5}$.

11. Acylaminophenole, z.B. 4-Hydroxy-laurinsäureanilid, 4-Hydroxystearinsäureanilid, N-(3,5-di-tert-butyl-4-hydroxyphenyl)-carbaminsäureoctylester.

12. Ester der β-(3,5-Di-tert-butyl-4-hydroxyphenyl)-propionsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxyethyl)-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.

13. Ester der β-15-tert-Butyl-4-hydroxy-3-methylphenyl)-propionsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.

14. Ester der β-(3,5-Dicyclohexyl-4-hydroxyphenyl)-propionsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.

15. Ester der 3,5-Di-tert-butyl-4-hydroxyphenylessigsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.

16. Amide der β-(3.5-Di-tert-butyl-4-hydroxyphenyl)-propionsäure, wie z.B. N,N'-Bis-(3,5-di-tert-butyl-4-hydroxyphenylpropionyl)-hexamethylendiamin, N,N'-Bis-(3,5-di-tert-butyl-4-hydroxyphenylpropionyl)-trimethylendiamin, N,N'-Bis-(3,5-di-tert-butyl-4-hydroxyphenylpropionyl)-hydrazin.

17. Ester der Thiodiessigsäure und Thiodipropionsäure

Bevorzugt sind Antioxidantien der Gruppen 5, 10 und 14 insbesondere 2,2-Bis-(4-hydroxyphenyl)-propan, Ester der 3,5-Di-tert-butyl-4-hydroxyphenylpropionsäure mit Octadecanol oder Pentaerythrit oder Tris-(2,4-di-tert-butylphenyl)-phosphit.

Gegebenenfalls kann auch ein Gemisch von Antioxidantien unterschiedlicher Struktur eingesetzt werden.

Die Antioxidantien können in einer Menge von beispielsweise 0,01 bis 10, zweckmässig 0,1 bis 10 und insbesondere 0,1 bis 5 Gew.-Teilen, bezogen auf 100 Gew.-Teile PVC, angewendet werden.

Als UV-Absorber und Lichtschutzmittel kommen beispielsweise in Betracht:

1.2-(2'-Hydroxyphenyl)-benztriazole, wie z.B. 2-(2'-Hydroxy-5'-methylphenyl)-benztriazol, 2-(3',5'-Di-tert-butyl-2'-hydroxyphenyl)-benztriazol, 2-(5'-tert-Butyl-2'-hydroxyphenyl)-benztriazol, 2-(2'-Hydroxy-5'-(1,1,3,3-tetramethylbutyl)phenyl)-benztriazol, 2-(3',5'-Di-tert-butyl-2'-hydroxyphenyl)-5-chlor-benztriazol, 2-(3'-tert-Butyl- 2'-hydroxy-5'-methylphenyl)-5-chlorbenztriazol, 2-(3'-sec-Butyl-5'-tert-butyl-2'-hydroxyphenyl)-benztriazol, 2-(2'-Hydroxy-4'-octoxyphenyl)-benztriazol, 2-(3',5'-Di-tert-amyl-2'-hydroxyphenyl)-benztriazol, 2-(3',5'-Bis-(α,α-dimethylbenzyl)-2'-hydroxyphenyl)-benztriazol, Mischung aus 2-(3'-tert-Butyl-2'-hydroxy-5'-(2-octyloxycarbonylethyl)phenyl)-5-chlor-benztriazol, 2-(3'-tert-Butyl-5'-[2-(2-ethylhexyloxy)-carbonylethyl]-2'-hydroxyphenyl)-5-chlor-benztriazol, 2-(3'-tert-Butyl-2'-hydroxy-5'-(2-methoxycarbonylethyl)phenyl)-5-chlor-benztriazol, 2-(3'-tert-Butyl-2'-hydroxy-5'-(2-methoxycarbonylethyl)phenyl)-benztriazol, 2-(3'-tert-Butyl-2'-hydroxy-5'-(2-octyloxycarbonylethyl)phenyl)-benztriazol, 2-(3'-tert-Butyl-5'-[2-(2-ethylhexyloxy)carbonylethyl ]-2'-hydroxyphenyl)-benztriazol, 2-(3'-Dodecyl-2'-hydroxy-5'-methylphenyl)-benztriazol, und 2-(3'-tert-Butyl-2'-hydroxy-5'-(2-isooctyloxycarbonylethyl)phenyl-benztriazol, 2,2'-Methylen-bis[4-(1,1,3,3-tetramethylbutyl)-6-benztriazol-2-yl-phenol]; Umesterungsprodukt von 2-[3'-tert-Butyl-5'-(2-methoxycarbonylethyl)-2'-hydroxy-phenyl]-benztriazol mit Polyethylenglycol 300; $[R-CH_2CH_2-COO(CH_2)_3]_2$ R = 3'-tert-Butyl-4'-hydroxy-5'-2H-benztriazol-2-yl-phenyl.

2. 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.

3. Ester von gegebenenfalls substituierten Benzoesäuren, wie z.B. 4-tert-Butyl-phenylsalicylat, Phenylsalicylat, Octylphenyl-salicylat, Dibenzoylresorcin, Bis-(4-tert-butylbenzoyl)-resorcin, Benzoylresorcin, 3,5-Di-tert-butyl-4-hydroxybenzoesäure-2,4-di-tert-butylphenylester, 3,5-Di-tert-butyl-4-hydroxybenzoesäurehexadecylester, 3,5-Di-tert-butyl-4-hydroxybenzoesäure-octadecylester, 3,5-Di-tert-butyl-4-hydroxybenzoesäure-2-methyl-4,6-di-tert-butylphenylester.

4. Acrylate, wie z.B. α-Cyan-β,β-diphenylacrylsäure-ethylester bzw. -isooctylester, α-Carbomethoxy-zimtsäure-methylester, α-Cyano-β-methyl-p-methoxy-zimtsäuremethylester bzw.-butylester, α-Carbomethoxy-p-methoxy-zimtsäure-methylester, N-(β-Carbomethoxy-β-cyanovinyl)-2-methyl-indolin.

5. Nickelverbindungen, wie z.B. Nickelkomplexe des 2,2'-Thio-bis-[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickel-dibutyldithiocarbamat, Nickelsalze von 4-Hydroxy-3,5-di-tert-butylbenzylphosphonsäuremonoalkylestern, wie vom Methyl- oder Ethylester, Nickelkomplexe von Ketoximen, wie von 2-Hydroxy-4-methyl-phenyl-undecylketoxim, Nickelkomplexe des 1-Phenyl-4-lauroyl-5-hydroxy-pyrazols, gegebenenfalls mit zusätzlichen Liganden.

6. Sterisch gehinderte Amine, wie z.B. Bis-(2,2,6,6-tetramethyl-piperidyl)-sebacat, Bis-(2,2,6,6-tetramethyl-piperidyl)-succinat, Bis-(1,2,2,6,6-pentamethylpiperidyl)-sebacat, n-Butyl-3,5-di-tert-butyl-4-hydroxybenzyl-malonsäure-bis(1,2,2,6,6-pentamethylpiperidyl)-ester, Kondensationsprodukt aus 1-Hydroxyethyl-2,2,6,6-tetramethyl-4-hydroxypiperidin und Bernsteinsäure, Kondensationsprodukt aus N,N'-Bis-(2,2,6,6-Tetramethyl-4-piperidyl)-hexamethylendiamin und 4-tert-Octylamino-2,6-dichlor-1,3,5-s-triazin, Tris-(2,2,6,6-tetramethyl- 4-piperidyl)-nitrilotriacetat, Tetrakis-(2,2,6,6-tetramethyl-4-piperidyl)-l,2,3,4-butantetraoat, 1,1'-(1,2-Ethandiyl)-bis-(3,3,5,5-tetramethyl-piperazinon), 4-Benzoyl-2,2,6,6-tetramethylpiperidin, 4-Stearyloxy-2,2,6,6-tetramethylpiperidin, Bis-(1,2,2,6,6-pentamethylpiperidyl)-2-n-butyl-2-(2-hydroxy-3,5-di-tert-butylbenzyl)-malonat, 3-n-Octyl-7,7,9,9-tetramethyl-1,3,8-triazaspiro[4.5]decan-2,4-dion, Bis-(1-octyloxy-2,2,6,6-tetramethylpiperidyl)-sebacat, Bis-(1-octyloxy-2,2,6,6-tetramethylpiperidyl)-succinat, Kondensationsprodukt aus N,N'-Bis-(2,2,6,6-tetramethyl-4-piperidyl)-hexamethylendiamin und 4-Morpholino-2,6-dichlor-1,3,5-triazin, Kondensationsprodukt aus 2-Chlor-4,6-di-(4-n-butylamino-2,2,6,6-tetramethylpiperidyl)-1,3,5-triazin und 1,2-Bis-(3-aminopropylamino)äthan, Kondensationsprodukt aus 2-Chlor-4,6-di-(4-n-butylamino-1,2,2,6,6-pentamethylpiperidyl)-1,3,5-triazin und 1,2-Bis-(3-aminopropylamino)-äthan, 8-Acetyl-3-dodecyl-7,7,9,9-tetramethyl-1,3,8-triazaspiro[4.5]decan-2,4-dion, 3-Dodecyl-1-(2,2,6,6-tetramethyl-4-piperidyl)pyrrolidin-2,5-dion, 3-Dodecyl-1-(1,2,2,6,6-pentamethyl-4-piperidyl)-pyrrolidin-2,5-dion, sowie Chimassorb966.

7. Oxalsäurediamide, wie z.B. 4,4'-Di-octyloxy-oxanilid, 2,2'-Di-octyloxy-5,5'-di-tert-butyl-oxanilid, 2,2'-Di-dodecyloxy-5,5'di-tert-butyl-oxanilid, 2-Ethoxy-2'-ethyl-oxanilid, N,N'-Bis-(3-dimethylaminopropyl)-oxalamid, 2-Ethoxy-5-tert-butyl-2'-ethyloxanilid und dessen Gemisch mit 2-Ethoxy-2'-ethyl-5,4'-di-tert-butyl-oxanilid, Gemische von o- und p-Methoxy- sowie von o- und p-Ethoxy-di-substituierten Oxaniliden.

8. 2-(2-Hydroxyphenyl)-1,3,5-triazine, wie z.B. 2,4,6-Tris(2-hydroxy-4-octyloxyphenyl)-1,3,5-triazin, 2-(2-Hydroxy-4-octyloxyphenyl)-4,6-bis-(2,4-dimethyphenyl)-1,3,5-triazin, 2-(2,4-Dihydroxyphenyl)-4,6-bis(2,4-dimethylphenyl)-1,3,5-triazin, 2,4-Bis(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl)-1,3,5-triazin, 2-(2-Hydroxy-4-dodecyloxyphenyl)-4,6-bis(2,4-dimethylphenyl)-1,3,5-triazin, 2-[2-hydroxy-4-(2-hydroxy-3-butyloxy-propyloxy)phenyl]-4,6-bis(2,4-dimethylphenyl)-1,3,5-triazin, 2-[2-hydroxy-4-(2-hydroxy-3-octyloxy-propyloxy)phenyl]-4,6-bis(2,4-dimethylphenyl)-1,3,5-triazin.

Als peroxidzerstörende Verbindungen kommen beispielsweise in Betracht:
Ester der β-Thio-dipropionsäure, beispielsweise der Lauryl-, Stearyl-, Myristyl- oder Tridecylester, Mercaptobenzimidazol, das Zinksalz des 2-Mercaptobenzimidazols, Zinkdibutyl-dithiocarbamat, Dioctadecyldisulfid, Pentaerythrit-tetrakis-(β-dodecylmercapto)propionat oder Ethylenglykolbismercaptoacetat.

Als Gleitmittel kommen beispielsweise in Betracht:
Montanwachs, Fettsäureester, PE-Wachse, Amidwachse, Polyolpartialester, teilverseifte PE-Wachse, sogenannte Komplexester Chlorparaffine, Glycerinester, Erdalkaliseifen oder Fettketone wie in DE4204887 beschrieben. Verwendbare Gleitmittel sind auch in "Taschenbuch der Kunststoff-Additive", Herausgeber R. Gächter und H. Müller, Hanser Verlag, 3.Auflage, 1990, Seiten 443-503 beschrieben. Weitere Gleitmittelausführungen insbesondere Kombinationen sind zu entnehmen in EP-A-0062813 und EP 0336289.

Als Polyole kommen beispielsweise in Betracht:
Pentaerythrit, Dipentaerythrit, Tripentaerythrit, Trimethylolethan, Bistrimethylolethan, Trimethylolpropan, Bistrimethylolpropan, Sorbit, Mannit, Xylit, Lactose, Leucrose, Tris(hydroxyethyl)-isocyanurat, Tris-(dihydroxypropyl)-isocyanurat, Inosite, Tetramethylolcyclohexanol, Tetramethylolcyclopentanol, Tetramethylolcyclopyranol, Glycerin, Diglycerin, Polyglycerin, Thiodiglykol, Thiodiglycerin, Bishydroxyethylweinsäureamid, Hexakishydroxyethyl-melamin, Bis-trihydroxymethyloxamid, Tris-trihydroxymethylcitramid sowie α-, β- und γ-Cyclodextrine.

Die Polyole können in einer Menge von beispielsweise 0,01 bis 20, zweckmässig 0,1 bis 20 und insbesondere 0,1 bis 10 Gew.-Teilen, besonders bevorzugt 0,1 bis 3 Teile, bezogen auf 100 Gew.-Teile PVC, angewendet werden.

Als Verbindungen aus der Reihe der Hydrotalcite, Zeolithe, Dawsonite, Magadiite, Kenyaite oder Kanemite kommen sowohl die natürlich vorkommenden Mineralien wie auch synthetisch hergestellte Verbindungen in Betracht.

Verbindungen aus der Reihe der Hydrotalcite können durch die allgemeine Formel (XIII),

$$M^{2+}{}_{1-x}\bullet M^{3+}{}_{x}\bullet(OH)_2\bullet(A^{n-})_{x/n}\bullet mH_2O \qquad (XIII)$$

wobei

- $M^{2+}$ = Mg, Ca, Sr, Zn und/oder Sn ist,
- $M^{3+}$ = Al, B oder Bi ist,
- $A^{n-}$ ein Anion mit der Valenz n darstellt,
- n eine Zahl von 1-4 ist,
- x eine Zahl von 0-0,5 ist und
- m eine Zahl von 0-2 ist,

beschrieben werden.

$A^{n-}$ ist bevorzugt $OH^-$, $Cl^-$, $Br^-$, $I^-$, $ClO_4^-$, $HCO_3^-$, $CH_3COO^-$, $C_6H_5COO^-$, $CO_3^{2-}$, $SO_4^{2-}$,

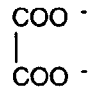 ,

$(CHOHCOO)_2^{2-}$, $(CHOH)_4CH_2OHCOO^-$. $C_2H_4(COO)_2^{2-}$, $(CH_2COO)_2^{2-}$, $CH_3CHOHCOO^-$, $SiO_3^{2-}$, $SiO_4^{4-}$, $Fe(CN)_6^{3-}$, $Fe(CN)_6^{4-}$, $HPO_3^{2-}$ oder $HPO_4^{2-}$.

Weitere Beispiele für Hydrotalcite finden sich in DE 4106403.

Andere Hydrotalcite, die zweckmässig eingesetzt werden können, sind Verbindungen mit der allgemeinen Formel (XIIIa),

$$M^{2+}{}_xAL_2(OH)_{2x+6nz}(A^{n-})_2 \bullet mH_2O \qquad \text{(XIIIa)}$$

wobei in vorliegender Formel (XIIIa) $M^{2+}$ wenigstens ein Metall aus der Reihe von Mg und Zn darstellt und Mg bevorzugt ist, $A^{n-}$ ein Anion, beispielsweise aus der Reihe von $CO_3^{2-}$, $CO\ _3^{2-}$ ,

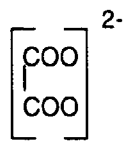 ,

$OH^-$ und $S^{2-}$ darstellt, wobei n die Valenz des Anions ist, m eine positive Zahl, vorzugsweise von 0,5 bis 5, darstellt und x und z positive Zahlen darstellen, wobei x vorzugsweise 2 bis 6 ist und z kleiner als 2 ist.

Bevorzugt sind Verbindungen aus der Reihe der Hydrotalcite der allgemeinen Formel (XIII),

$$M^{2+}{}_{1-x} \bullet M^{3+}{}_x \bullet (OH)_2 \bullet (A^{n-})_{x/n} \bullet mH_2O \qquad \text{(XIII)}$$

wobei $M^{2+}$ die Bedeutung von Mg oder einer festen Lösung von Mg und Zn hat, $A^{n-}$ für $CO_3^{2-}$ steht, x eine Zahl von 0 bis 0,5 ist und m eine Zahl von 0 bis 2 ist.

Ganz besonders bevorzugt sind Hydrotalcite der Formeln

$Al_2O_3.6MgO.CO_2.12H_2O$,

$Mg_{4,5}Al_2(OH)_{13}.CO_3.3,5H_2O$,

$4MgO.Al_2O_3.CO_2.9H_2O$,

$4MgO.Al_2O_3.CO_2.6H_2O$,

$ZnO.3MgO.Al_2O_3.CO_2.8\text{-}9H_2O$ oder

$ZnO.3MgO.Al_2O_3.CO_2.5\text{-}6H_2O$ .

Zeolithe können durch die allgemeine Formel (XIV)

$$M_{x/n}[(AlO_2)_x(SiO_2)_y].wH_2O \qquad \text{(XIV)}$$

wobei n die Ladung des Kations M,

M ein Element der ersten oder zweiten Hauptgruppe, sowie Zink,

y:x eine Zahl zwischen 0,8 und unendlich, vorzugsweise zwischen 0,8 und 10,5 und
w eine Zahl zwischen 0 und 300 ist,

beschrieben werden.

Weiter sind verwendbare Zeolithe aus "Atlas of Zeolite Structure Types", W.M. Meier und D.H. Olson, Verlag Butterworths, 3. Auflage 1992 bekannt.

Zu Zeolithen im weiteren Sinne sind auch Aluminiumphosphate mit Zeolithstruktur zu rechnen.

Die bevorzugten an sich bekannten Zeolithe weisen einen durchschnittlichen wirksamen Porendurchmesser von 3-5Å auf und können nach bekannten Methoden hergestellt werden.

Besonders bevorzugt sind Zeolithe vom Typ NaA, die einen durchschnittlichen wirksamen Porendurchmesser von 4Å besitzen, weshalb sie auch als Zeolithe 4A bezeichnet werden.

Besonders bevorzugt sind kristalline Natriumalumosilikate, deren Teilchengrösse wenigstens weitaus überwiegend im Bereich von 1-10µ liegt.

In einer bevorzugten Ausführung können auch Natriumalumosilikate mit abgerundeten Ecken und Kanten verwendet werden.

Bevorzugt sind Verbindungen der Formeln

$Na_{12}Al_{12}Si_{12}O_{48}$ . 27 $H_2O$ [Zeolith A],

$Na_6Al_6Si_6O_{24}$ . 2 NaX . 7,5 $H_2O$, X= OH, Halogen, $ClO_4$ [Sodalith]

$Na_6Al_6Si_{30}O_{72}$ . 24 $H_2O$,

$Na_8Al_8Si_{40}O_{96}$ . 24 $H_2O$,

$Na_{16}Al_{16}Si_{24}O_{80}$ . 16 $H_2O$,

$Na_{16}Al_{16}Si_{32}O_{96}$ . 16 $H_2O$,

$Na_{56}Al_{56}Si_{136}O_{384}$ . 250 $H_2O$, [Zeolith Y]

$Na_{86}Al_{86}Si_{106}O_{384}$ . 264 $H_2O$ [Zeolith X]

oder die durch teilweisen bzw. vollständigen Austausch der Na-Atome durch Li-, K-, Mg-, Ca-, Sr- oder Zn-Atome darstellbaren Zeolithe wie

$(Na,K)_{10}Al_{10}Si_{22}O_{64}$ . 20 $H_2O$ ·

$Ca_{4,5}Na_3[(AlO_2)_{12}(SiO_2)_{12}]$ . 30 $H_2O$

$K_9Na_3[(AlO_2)_{12}(SiO_2)_{12}]$ . 27 $H_2O$

Geeignete Dawsonite oder allgemeiner Alumosalzverbindungen beispielsweise der Formel (XV) $\{(Mt_2O)_m.(Al_2O_3)_n.Z_o.pH_2O\}$, worin Mt H, Na, K, Li $Mg_{1/2}$, $Ca_{1/2}$, $Sr_{1/2}$ oder $Zn_{1/2}$; Z $CO_2$, $SO_2$, $(Cl_2O_7)_{1/2}$, $B_4O_6$, $S_2O_2$ (Thiosulfat) oder $C_2O_2$ (Oxalat); m eine Zahl zwischen 1 und 3; n eine Zahl zwischen 1 und 4; o eine Zahl zwischen 2 und 4; und p eine Zahl zwischen 0 und 30 ist; können natürlich vorkommende Mineralien sein oder synthetisch hergestellte Verbindungen. Die Metalle können partiell gegeneinander ausgetauscht sein. Die genannten Dawsonite sind kristallin, teilkristallin oder amorph oder können als getrocknetes Gel vorliegen. Die Dawsonite können auch in selteneren, kristallinen Modifikationen vorliegen. Ein Verfahren zur Herstellung solcher Verbindungen ist in EP-A-0394670 angegeben. Beispiele für natürlich vorkommende Alumosalzverbindungen sind Indigirit, Tunisit, Alumohydrocalcit, Para-Alumohydrocalcit, Strontiodresserit und Hydro-Strontiodresserit. Weitere Beispiele für Alumosalz-Verbindungen sind Kaliumalumocarbonat $\{(K_2O).(Al_2O_3).(CO_2)_2.2H_2O\}$, Natriumalumothiosulfat $\{(Na_2O).(Al_2O_3).(S_2O_2)_2.2H_2O\}$, Kaliumalumosulfit $\{(K_2O).(Al_2O_3).(SO_2)_2.2H_2O\}$, Calciumalumooxalat $\{(CaO).(Al_2O_3).(C_2O_2)_2.5H_2O\}$, Magnesiumalumotetraborat $\{(MgO).(Al_2O_3).(B_4O_6)_2.5H_2O\}$, $\{([Mg_{0,2}Na_{0,6}]_2O).(Al_2O_3).(CO_2)_2.4,1H_2O\}$, $\{([Mg_{0,2}Na_{0,6}]_2O).(Al_2O_3).(CO_2)_2.4,3H_2O\}$ und $\{([Mg_{0,3}Na_{0,4}]_2O).(Al_2O_3).(CO_2)_{2,2}.4,9H_2O\}$.

Geeignet ist ein Magadiit der Formel $Na_2Si_{14}O_{29}.nH_2O$ oder $Na_2Si_8O_{17}.nH_2O$, worin n eine Zahl 0-30 ist.

Geeignet ist ein Kenyait der Formel $Na_2Si_{22}O_{45}.nH_2O$, worin n eine Zahl 0-30 ist.

Geeignet ist ein Kanemit der Formel $Na_2Si_2O_5.nH_2O$, $NaHSi_2O_5.nH_2O$ oder $Na_2Si_4O_9.nH_2O$, worin n eine Zahl

0-30 ist.

Die verwendbaren Magadiite, Kenyaite oder Kanemite können natürlich vorkommende Mineralien sein oder synthetisch hergestellte Verbindungen. Ein Verfahren zur Herstellung solcher Verbindungen findet sich beispielsweise in EP-A-0472144, EP-A-0615955, EP-A-0615956, EP-A-0627383 und DE-A-4107955.

Die gemischten Alumosalz-Verbindungen können nach an sich bekannten Verfahren durch Kationenaustausch, bevorzugt aus den Alkali-Alumosalz-Verbindungen oder durch Kombinationsfällung (siehe beispielsweise US-A-5,194,458) erhalten werden.

Bevorzugt sind Alumosalz-Verbindungen der Formel (XV),
worin Mt Na oder K; Z $CO_2$, $SO_2$ oder $(Cl_2O_7)_{1/2}$; m 1-3; n 1-4; o 2-4 und p 0-20 bedeuten. Besonders bevorzugt bedeutet Z $CO_2$.

Weiter sind Verbindungen bevorzugt, welche sich durch folgende Formeln darstellen lassen:

$$Mt_2O.Al_2O_3.(CO_2)_2 \,.\, pH_2O \qquad \text{(XVa)}$$

$$(Mt_2O)_2.(Al_2O_3)_2.(CO_2)_2 \,.\, pH_2O \qquad \text{(XVb)}$$

$$Mt_2O.(Al_2O_3)_2.(CO_2)_2.\, pH_2O \qquad \text{(XVc)}$$

wobei Mt ein Metall wie Na, K, $Mg_{1/2}$, $Ca_{1/2}$, $Sr_{1/2}$ oder $Zn_{1/2}$ und p eine Zahl zwischen 0 und 12 bedeutet.

Weiterhin sind bevorzugt ein Magadiit der Formel $Na_2Si_{14}O_{29}.6H_2O$ und ein Kenyait der Formel $Na_2Si_{22}O_{45}.7H_2O$

Bevorzugt ist ein stabilisiertes halogenhaltiges Polymer enthaltend

(a) PVC oder dessen Recyclat,
(b) Maltit oder Laktit,

und (c) 0,001-5,0 Teile je 100 Teile PVC einer anorganischen oder organischen Zink-Verbindung;
sowie gegebenenfalls ein phenolisches Antioxidans, insbesondere 0,1-5,0 Teile je 100 Teile PVC.

Bevorzugt ist ferner ein stabilisiertes halogenhaltiges Polymer, das zusätzlich ein β-Diketon und/oder dessen Mg-, Ca- bzw. Zn-Salze oder einen β-Ketoester enthält.

Bevorzugt ist femer ein stabilisiertes halogenhaltiges Polymer, das zusätzlich ein Epoxid enthält.

Bevorzugt ist ferner ein stabilisiertes halogenhaltiges Polymer, das zusätzlich ein monomeres, oligomeres oder polymeres Dihydropyridin enthält.

Bevorzugt ist ferner ein stabilisiertes halogenhaltiges Polymer, das zusätzlich eine anorganische oder organische Calciumverbindung enthält.

Bevorzugt ist ferner ein stabilisiertes halogenhaltiges Polymer, das zusätzlich ein Phosphit, eine Perchlorat-Verbindung, ein Polyol, einen Hydrotalcit, einen Zeolith, einen Dawsonit, einen Magadiit, einen Kenyait oder einen Kanemit enthält.

Besonders bevorzugt ist ein stabilisiertes halogenhaltiges Polymer, das neben (a), (b) und (c), ein β-Diketon und/oder dessen Mg-, Ca-, bzw. Zn-Salz oder einen β-Ketoester und ein monomeres, oligomeres oder polymeres Dihydropyridin enthält.

Besonders bevorzugt ist ferner ein stabilisiertes halogenhaltiges Polymer, das neben (a), (b) und (c), ein β-Diketon und/oder dessen Mg-, Ca-, bzw. Zn-Salz oder einen β-Ketoester und ein Polyol, einen Hydrotalcit, einen Zeolith, einen Dawsonit, einen Magadiit, einen Kenyait oder einen Kanemit enthält.

Besonders bevorzugt ist ferner ein stabilisiertes halogenhaltiges Polymer, das neben (a), (b) und (c), eine Perchlorat-Verbindung und ein Polyol, einen Hydrotalclt, einen Zeolith, einen Dawsonit, einen Magadiit, einen Kenyait oder einen Kanemit enthält.

Besonders bevorzugt ist ferner ein stabilisiertes halogenhaltiges Polymer, das neben (a), (b) und (c), ein Epoxid und eine Perchlorat-Verbindung enthält.

Die beiden letztgenannten Kombinationen können zusätzlich ein β-Diketon, dessen Mg-, Ca-, bzw. Zn-Salz oder einen β-Ketoester oder Mischungen hieraus enthalten.

Sämtliche Kombinationen können zusätzlich eine Calciumseife, und/oder ein Gleitmittel enthalten.

Ein weiterer Gegenstand der vorliegenden Erfindung ist eine Stabilisatormischung enthaltend Maltit oder Laktit und eine anorganische oder organische Zink-, Aluminium- oder Seltenerd-Verbindung, wobei die Zusammensetzung keine Kombination einer Calcium- und Zinkseife enthält, wenn der Disaccharidalkohol Maltit ist. Für die einzelnen

Mischungsbestandteile gelten die vorstehend erläuterten Bevorzugungen, ebenso kann die Stabilisatormischung die oben beschriebenen weiteren Bestandteile enthalten.

Ein weiterer Gegenstand der vorliegenden Erfindung ist die Verwendung von Maltit oder Laktit in Kombination mit einer anorganischen oder organischen Zink-, Aluminium- oder Seltenerd-Verbindung, wobei die Zusammensetzung keine Kombination einer Calcium- und Zinkseife enthält, wenn der Disaccharidalkohol Maltit ist, zur Stabilisierung eines halogenhaltigen Polymers oder Polymer-Recyclates. Für die einzelnen Stabilisatoren sowie das halogenhaltige Polymer selber gelten die vorstehend erläuterten Bevorzugungen, ebenso kann zusätzlich einer der oben beschriebenen weiteren Bestandteile verwendet werden.

Das erfindungsgemässe stabilisierte halogenhaltige Polymer kann auf an sich bekannte Weise hergestellt werden, wozu man unter Verwendung an sich bekannter Vorrichtungen, wie Kalander, Mischer, Kneter, Extruder und dergleichen, die genannten Stabilisatoren und gegegbenenfalls weitere Zusätze mit dem halogenhalrigen Polymer vermischt.

Das nach vorliegender Erfindung stabilisierte halogenhaltige Polymer kann auf bekannte Weisen in die gewünschte Form gebracht werden. Solche Verfahren sind beispielsweise Mahlen, Kalandrieren, Extrudieren, Spritzgiessen, Sintern oder Spinnen, ferner Extrusions-Blasen oder eine Verarbeitung nach dem Plastisol-Verfahren. Das stabilisierte halogenhaltige Polymer kann auch zu Schaumstoffen verarbeitet werden.

Das erfindungsgemässe halogenhaltige Polymer eignet sich besonders für Halbhart- und Weich-Rezepturen, insbesondere in Form von Weichrezepturen für Drahtummantelungen, Kabelisolierungen, welche besonders bevorzugt ist. In Form von Halbhart-Rezepturen eignet sich das erfindungsgemässe halogenhaltige Polymer besonders für Dekorationsfolien, Schaumstoffe, Agrarfolien, Schläuche, Dichtungsprofile und Bürofolien.

In Form von Hart-Rezepturen eignet sich das erfindungsgemäss stabilisierte halogenhaltige Polymer besonders für Hohlkörper (Flaschen), Verpackungsfolien (Tiefziehfolien), Blasfolien, Crash pad-Folien (Automobile), Rohre, Schaumstoffe, Schwerprofile (Fensterrahmen), Lichtwandprofile, Bauprofile, Sidings, Fittings, Bürofolien und Apparatur-Gehäuse (Computer, Haushaltsgeräte).

Beispiele für die Anwendung des erfindungsgemässen halogenhaltigen Polymers als Plastisol sind Kunstleder, Fussböden, Textilbeschichtungen, Tapeten, Coil-Coatings und Unterbodenschutz für Kraftfahrzeuge.

Beispiele für Sinter-Anwendungen des erfindungsgemäss stabilisierten halogenhaltigen Polymers sind Slush, Slush Mould und Coil-Coatings.

Die folgenden Beispiele erläutern die Erfindung weiter, ohne sie darauf zu beschränken. Teile und Prozente beziehen sich, wie auch in der übrigen Beschreibung, auf das Gewicht, sofern nicht anders angegeben.

Beispiele :

Eine PVC-Zusammensetzung wird durch Vermischen der einzelnen Komponenten gemäss nachfolgender Tabelle 1 hergestellt (Mengenangaben in Gew.-Teilen).

Die Bestandteile werden während 5 Minuten auf einem Mischwalzwerk bei 180°C homogenisiert, so dass man einen 0,3-0,5mm dicken Film erhält.

Die Bestimmung der Langzeitstabilität erfolgt nach DIN53381, wobei das Probestück bei 180°C in einem Testofen gelagert wird und die Zeit bis zur Schwärzung der Probe bestimmt wird (Test 1).

Eine weitere Bestimmung der Stabilität erfolgt durch den Dehydrochlorierungstest, welcher in Anlehnung an DIN 53381, Bl.3 durchgeführt wird. Hierbei wird bei 180°C die Zeit bis zum Anstieg der Dehydrochlorierungskurve (Überschreiten einer Leitfähigkeit von 200µS) bestimmt (Test 2).

Eine weitere Bestimmung der Stabilität erfolgt durch Verpressen der Filme bei 180°C und 200bar während 2 Minuten zu 2mm dicken Platten, deren Yellowness-Index gemäss ASTM D 1925-70 bestimmt wird (Test 3).

Tabelle 1:

| Komponente | V-1 | V-2 | Bsp. 1 | Bsp. 2 |
|---|---|---|---|---|
| PVC-1 | 100 | 100 | 100 | 100 |
| Gl-1 | 0,6 | 0,6 | 0,6 | 0,6 |
| Gl-2 | 0,2 | 0,2 | 0,2 | 0,2 |
| ESO | 2 | 2 | 2 | 2 |
| Zn-1 | 0,4 | 0,4 | 0,4 | 0,4 |
| MSA | | 0,4 | | |
| DSA-1 | | | 0,4 | |

Tabelle 1: (fortgesetzt)

| Komponente | V-1 | V-2 | Bsp. 1 | Bsp. 2 |
|---|---|---|---|---|
| DSA-2 | | | | 0,4 |
| Test-1 (Minuten) | 30 | 55 | 65 | 65 |
| Test-2 (Minuten) | 18 | 44 | 46 | 46 |
| Test-3 (Y) | - | 83 | 76 | 77 |

Gegenüber den Vergleichsproben (V-1 und V-2) zeigen die erfindungsgemässen PVC-Mischungen eine höhere Stabilität.

Beispiele 3-4:

Eine PVC-Zusammensetzung wird durch Vermischen der einzelnen Komponenten gemäss nachfolgender Tabelle3 hergestellt (Mengenangaben in Gew.-Teilen).

Die Bestandteile werden während 5 Minuten auf einem Mischwalzwerk bei 170°C homogenisiert, sodass man einen 0,3-0,5mm dicken Film erhält.

Die Bestimmung der Thermostabilität erfolgt nach DIN53381, wobei das Probestück bei 170°C in einem Testofen gelagert wird und die Zeit bis zur Schwärzung der Probe bestimmt wird.

Tabelle 3:

| Komponente | V-5 | Bsp. 3 | Bsp.4 |
|---|---|---|---|
| PVC | 100 | 100 | 100 |
| DOP | 57 | 57 | 57 |
| ESO | 3 | 3 | 3 |
| Zn-1 | 0,4 | 0,4 | 0,4 |
| DSA-1 | - | 0,4 | |
| DSA-2 | - | | 0,4 |

Nach 20 Minuten hat sich die Probe V-5 dunkel verfärbt, wohingegen die erfindungsgemässen Proben (Bsp. 3-4) erst nach 50 Minuten dunkel gefärbt sind.

In obigen Beispielen werden folgende Substanzen eingesetzt:

PVC-1: Evipol SH 7020 (S-PVC, K-Wert 71)
Ca-1: Calciumstearat
DOP: Dioctylphthalat
DSA-1: Maltit
DSA-2: Laktit
ESO: epoxidiertes Sojabohnenöl
Gl-1: Gleitmittel Loxiol G 16
Gl-2: PE-Wachs
MSA: Sorbit
Zn-1: Zinkstearat

**Patentansprüche**

**1.** Stabilisiertes halogenhaltiges Polymer, enthaltend

(a) halogenhaltiges Polymer oder dessen Recyclat,
(b) Maltit oder Laktit
und (c) eine anorganische oder organische Zink-, Aluminium- oder Seltenerd-Verbindung, wobei die Zusammensetzung keine Kombination einer Calcium- und Zinkseife enthält, wenn Komponente (b) Maltit ist.

2. Stabilisiertes halogenhaltiges Polymer gemäss Anspruch 1, enthaltend als Komponente (a) PVC oder dessen Recyclat, sowie gegebenenfalls ein phenolisches Antioxidans, insbesondere 0,1-5,0 Teile je 100 Teile PVC.

3. Stabilisiertes halogenhaltiges Polymer gemäss Anspruch 1, enthaltend zusätzlich ein β-Diketon und/oder dessen Mg-, Ca- bzw. Zn-Salze oder einen β-Ketoester.

4. Stabilisiertes halogenhaltiges Polymer gemäss Anspruch 1, enthaltend zusätzlich ein Epoxid.

5. Stabilisiertes halogenhaltiges Polymer gemäss Anspruch 1, enthaltend zusätzlich ein monomeres, oligomeres oder polymeres Dihydropyridin.

6. Stabilisiertes halogenhaltiges Polymer gemäss Anspruch 1, enthaltend zusätzlich eine anorganische oder organische Calciumverbindung.

7. Stabilisiertes halogenhaltiges Polymer gemäss Anspruch 1, enthaltend zusätzlich ein Phosphit, eine Perchlorat-Verbindung, ein Polyol, einen Hydrotalcit, einen Zeolith, einen Dawsonit, einen Magadiit, einen Kenyait oder einen Kanemit.

8. Stabilisiertes halogenhaltiges Polymer gemäss Anspruch 1, enthaltend zusätzlich ein β-Diketon und/oder dessen Mg-, Ca-, bzw. Zn-Salz oder einen β-Ketoester und ein monomeres, oligomeres oder polymeres Dihydropyridin.

9. Stabilisiertes halogenhaltiges Polymer gemäss Anspruch 1, enthaltend zusätzlich ein β-Diketon und/oder dessen Mg-, Ca-, bzw. Zn-Salz oder einen β-Ketoester und ein Polyol, einen Hydrotalcit, einen Zeolith, einen Dawsonit, einen Magadiit, einen Kenyait oder einen Kanemit.

10. Stabilisiertes halogenhaltiges Polymer gemäss Anspruch 1, enthaltend zusätzlich eine Perchlorat-Verbindung und ein Polyol, einen Hydrotalcit, einen Zeolith, einen Dawsonit, einen Magadiit, einen Kenyait oder einen Kanemit.

11. Stabilisiertes halogenhaltiges Polymer gemäss Anspruch 1, enthaltend zusätzlich ein Epoxid und eine Perchlorat-Verbindung.

12. Stabilisatormischung enthaltend

Maltit oder Laktit;
und eine anorganische oder organische Zink-, Aluminium- oder Seltenerd-Verbindung, wobei die Zusammensetzung keine Kombination einer Calcium- und Zinkseife enthält, wenn der Disaccharidalkohol Maltit ist.

13. Verwendung einer Stabilisatormischung, enthaltend

Maltit oder Laktit;
und eine anorganische oder organische Zink-, Aluminium- oder Seltenerd-Verbindung, wobei die Zusammensetzung keine Kombination einer Calcium- und Zinkseife enthält, wenn der Disaccharidalkohol Maltit ist;
zur Stabilisierung von einem halogenhaltigen Polymer oder Polymer-Recyclat.

14. Verfahren zur Herstellung von einem stabilisierten halogenhaltigen Polymer, dadurch gekennzeichnet, dass man unter Verwendung von Vorrichtungen, wie Kalander, Mischer, Kneter, Extruder und dergleichen, eine Stabilisatormischung enthaltend

Maltit oder Laktit und eine anorganische oder organische Zink-, Aluminium- oder Seltenerd-Verbindung, wobei die Zusammensetzung keine Kombination einer Calcium- und Zinkseife enthält, wenn der Disaccharidalkohol Maltit ist;
als solche oder in Form ihrer einzelnen Bestandteile und gegebenenfalls weiterer Zusätze mit einem halogenhaltigen Polymer oder Polymer-Recyclat vermischt.

Europäisches Patentamt

# EUROPÄISCHER RECHERCHENBERICHT

Nummer der Anmeldung
EP 98 11 8225

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A,D | DATABASE WPI<br>Derwent Publications Ltd., London, GB;<br>AN 88-116659<br>XP002082429<br>& JP 63 063737 A (DAINIPPON INK CHEM KK)<br>, 22. März 1988<br>* Zusammenfassung * | 1-14 | C08K5/15<br>C08K3/00<br>C08K5/00<br>//(C08K5/15, 5:15,3:00), (C08K5/15, 5:15,5:00) |
| A | DE 19 00 314 A (UNILEVER-EMERY N.V.)<br>4. September 1969<br>* Ansprüche 1,15 * | 1-14 | |
| A | EP 0 167 174 A (LONZA AG) 8. Januar 1986<br>* Anspruch 1 * | 1-14 | |

RECHERCHIERTE SACHGEBIETE (Int.Cl.6)
C08K

Der vorliegende Recherchenbericht wurde für alle Patentansprüche erstellt

| Recherchenort | Abschlußdatum der Recherche | Prüfer |
|---|---|---|
| DEN HAAG | 28. Oktober 1998 | Siemens, T |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)